# EUROPEAN PATENT APPLICATION

(11) **EP 2 785 104 A2**
(43) Date of publication of application: **01.10.2014**
(21) Application number: 14162783.6
(22) Date of filing: 31.03.2014
(51) Int. Cl.: H04W 28/02

(54) **Method and apparatus for controlling congestion in wireless communication system**

(30) Priority: 29.03.2013 KR 20130034795; 03.05.2013 KR 20130050036; 20.05.2013 KR 20130056706; 03.07.2013 KR 20130078005
(71) Applicant: Samsung Electronics Co., Ltd., Suwon-si Gyeonggi-do 443-742 (KR)
(72) Inventor: Jeong, Sangsoo, 443-742 Gyeonggi-do (KR); Cho, Songyean, 443-742 Gyeonggi-do (KR); Bae, Beomsik, 443-742 Gyeonggi-do (KR)
(74) Representative: Grünecker, Kinkeldey, Stockmair & Schwanhäusser

(57) **Abstract**

A method and an apparatus for controlling congestion by an Evolved Node B (ENB) in a wireless communication system are provided. The method includes receiving a message including congestion notification required indication from a core network node of the wireless communication system, determining whether a congestion notification on the packet is required based on the congestion notification required indication and transmitting a data packet with the congestion notification according to a result of the determination.

## Description

### TECHNICAL FIELD

The present disclosure relates to a wireless communication system. More particularly, the present disclosure relates to a method and an apparatus for controlling congestion in a wireless communication system.

### BACKGROUND

In general, a wireless communication system was developed to provide a voice service while guaranteeing activity of users. However, the wireless communication system has gradually expanded a service area thereof from the voice service to a data service. In recent years, the wireless communication system has been developed to the extent that a high-speed data service can be provided. However, since there are a resource shortage phenomenon and a demand for a higher speed service by users in the current wireless communication system providing services, a more-advanced wireless communication system is needed.

To meet the demand, standardization of Long Term Evolution (LTE) is being progressed by 3rd Generation Partnership Project (3GPP) as one of next generation wireless communication systems which are being developed. LTE is a technology implementing high speed packet based communication having a transmission rate of a maximum of 100 Mbps. For the transmission rate, various plans are being discussed. For example, there are plans to reduce a number of nodes located on a communication path through a simple network structure and to bring wireless protocols as close as possible to a wireless channel.

Radio Access Network (RAN) nodes of the wireless communication system are needed to transmit/receive data to/from users within limited frequencies. When users in a cell managed by the RAN node increase or traffic transmitted by the users increases, a congestion status may occur.

Therefore, a need exists for a method and an apparatus for effectively controlling a congestion status in a wireless communication system.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method and an apparatus for effectively controlling a congestion status in a wireless communication system.

In accordance with an aspect of the present disclosure, a method for controlling congestion by an Evolved Node B (ENB) in a wireless communication system is provided. The method includes receiving a message including congestion information marking application information from a core network node of the wireless communication system, determining whether a congestion information marking on the packet is needed based on the congestion information marking application information, and transmitting a data packet with the congestion information marking according to a result of the determination.

In accordance with another aspect of the present disclosure, a method for controlling congestion by a core network node in a wireless communication system is provided. The method includes determining whether a congestion information marking by an ENB is needed, generating a message including congestion information marking application information based on a result of the determination, and transmitting the message to the ENB.

In accordance with another aspect of the present disclosure, an ENB controlling congestion in a wireless communication system is provided. The ENB includes a transceiver configured to transmit/receive a signal to/from a UE or a core network node of the wireless communication system, and a controller configured to receive a message including congestion information marking application information from the core network node, to determine whether a congestion information marking on the packet is needed based on the congestion information marking application information, and to transmit a data packet with the congestion information marking according to a result of the determination.

In accordance with another aspect of the present disclosure, a core network node controlling congestion in a wireless communication system is provided. The core network node includes a transceiver configured to transmit/receive a signal to/from an ENB, and a controller configured to determine whether a congestion information marking by an ENB is needed, to generate a message including congestion information marking application information based on a result of the determination, and to transmit the message to the ENB.

According to the present disclosure, it is possible to effectively control a congestion status in a wireless communication system.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a structure of a Long Term Evolution (LTE) mobile communication system according to an embodiment of the present disclosure;
FIG. 2 illustrates a method for transmitting congestion information by using a user plane according to an embodiment of the present disclosure;
FIG. 3 illustrates a method for instructing a Radio Access Network (RAN) node whether to apply congestion information marking when congestion is generated according to an embodiment of the present disclosure;
FIG. 4 is a flowchart illustrating a method in which, when a User Equipment (UE) in an idle mode is switched to a connected mode, the UE transmits information on whether congestion information marking is needed to a RAN node according to an embodiment of the present disclosure;
FIG. 5 illustrates an operation for determining whether to apply congestion information marking through a packet filter for each Internet Protocol (IP) flow according to an embodiment of the present disclosure;
FIG. 6 is a flowchart illustrating an operation order of a UE according to an embodiment of the present disclosure;
FIG. 7 is a flowchart illustrating an operation order of a RAN node, that is, an Evolved Node B (ENB) according to an embodiment of the present disclosure;
FIG. 8 is a flowchart illustrating a process of configuring a RAN node such that congestion information marking is applied to a particular IP flow according to an embodiment of the present disclosure;
FIG. 9 illustrates an internal structure and an internal operation of a UE according to an embodiment of the present disclosure;
FIG. 10 illustrates concepts of a UE and a communication system according to an embodiment of the present disclosure;
FIG. 11 illustrates an operation in which a UE discovers a Status/Control Function (SCF) to access according to an embodiment of the present disclosure;
FIG. 12 is a flowchart illustrating a process in which an SCF configures a user status information report in a UE according to an embodiment of the present disclosure;
FIG. 13 is a flowchart illustrating a method in which an SCF discovers a Mobility Management Entity (MME) connected to a UE according to an embodiment of the present disclosure;
FIG. 14 is a flowchart illustrating a process of discovering an MME for a UE according to an embodiment of the present disclosure;
FIG. 15 is a flowchart illustrating a process of marking congestion information on a user plane and transmitting the user plane and a method for simultaneously using information of a UE status analyzer according to an embodiment of the present disclosure;
FIG. 16 illustrates an embodiment in which a congestion status of a RAN is transmitted through a control plane according to an embodiment of the present disclosure;
FIG. 17 illustrates an embodiment in which a RAN node controls a UE based on status information of the UE and congestion information of a network according to an embodiment of the present disclosure;
FIGS. 18 and 19 illustrate an operation in which a RAN node controls a UE based on status information of the UE and congestion information of a network according to an embodiment of the present disclosure;
FIG. 20 illustrates a method for using an SCF and an Access Network Discovery Service Function (ANDSF) according to an embodiment of the present disclosure;
FIG. 21 is a block diagram illustrating an internal structure of a UE according to an embodiment of the present disclosure;
FIG. 22 is a block diagram illustrating an internal structure of a RAN node, that is, an ENB according to an embodiment of the present disclosure;
FIG. 23 illustrates a congestion control operation according to an embodiment of the present disclosure;
FIG. 24 is a flowchart illustrating a congestion control operation according to an embodiment of the present disclosure;
FIG. 25 is a flowchart illustrating a process of de-prioritizing a scheduling according to an SCI range value configured to a UE when an ENB is in a congestion status according to an embodiment of the present disclosure; and
FIG. 26 is a flowchart illustrating an operation order according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. For example, a congestion notification, a congestion reporting and a congestion information have same meaning one another. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an,'" and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

According to various embodiments of the present disclosure, a basic 3rd Generation Partnership Project (3GPP) Long Term Evolution (LTE) system will be considered as a main subject. However, various embodiments of the present disclosure may be applied even to other communication/computer systems having a similar technical background and a similar system form without significantly departing from the scope of the present disclosure. This applicability can be determined by those skilled in the art in the technical field of the present disclosure. For example, the present technology directed to the LTE system may also be applied to the Universal Terrestrial Radio Access Network (UTRAN)/Global System for Mobile communications (GSM) Enhanced Data rates for GSM Evolution (EDGE) GSM EDGE Radio Access Network (GERAN) system having the similar system architecture. With regard to this, Evolved Node B (ENB) (RAN node) may be replaced by a Radio Network Controller (RNC)/Base Station Controller (BSC), Serving-GateWay (S-GW) may be omitted or incorporated in a Serving General Packet Radio Service (GPRS) Support Node (SGSN), and a Packet Data Network (PDN)-GateWay (P-GW) may correspond to a Gateway GPRS Support Node (GGSN). Further, the concept of a bearer in the LTE system may correspond to a Packet Data Protocol (PDP) context in the UTRAN/GERAN system.

According to an embodiment of the present disclosure, in order to reduce system loads due to an exchange of congestion information, the congestion information is exchanged using user plane data instead of control plane signaling. The user plane data includes user data packets which a user equipment actually exchanges with a PDN and header information for transmitting the user data packets.

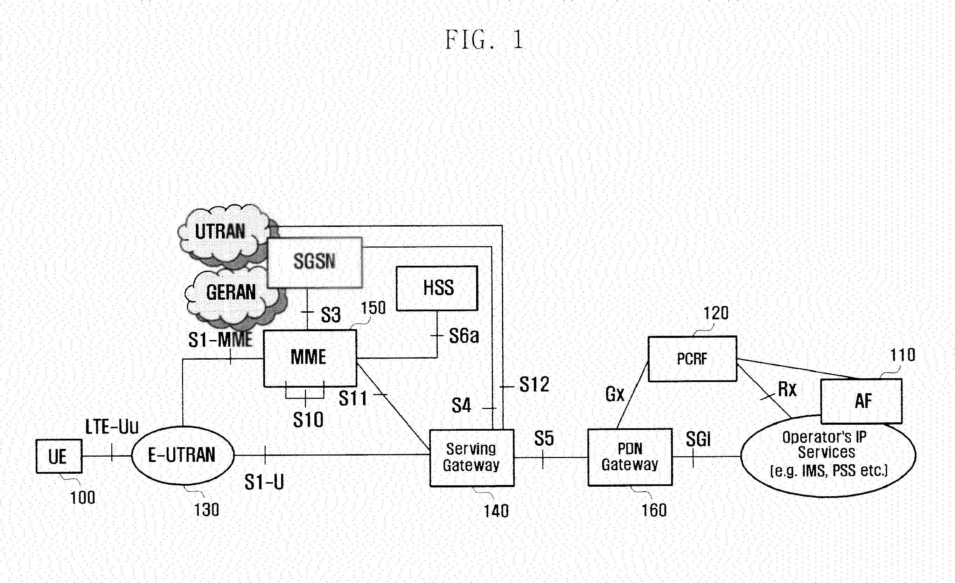

FIG. 1 illustrates a structure of an LTE mobile communication system according to an embodiment of the present disclosure.

Referring to FIG. 1, a radio access network of the LTE mobile communication system includes an Evolved Node B or EUTRAN (hereinafter referred to as an ENB or a Node B) 130, a Mobility Management Entity (MME) 150, and a S-GW 140.

A User Equipment (hereinafter referred to as a UE) 100 accesses an external network through the ENB 130, the S-GW 140, and a P-GW 160.

An Application Function (AF) 110 corresponds to a device for exchanging information related to an application with a user in an application level.

A Policy and Charging Rules Function (PCRF) 120 corresponds to a device for controlling a policy related to Quality of Service (QoS) of the user and a Policy and Charging Control (PCC) rule corresponding to the policy is transferred to the P-GW 160 and then applied.

The ENB 130 is a RAN node and corresponds to an RNC of a UTRAN system and a BSC of a GERAN system. The ENB 130 is connected to the UE 100 through a wireless channel and performs a similar function as that of an RNC/BSC of the related art.

In LTE, since all user traffic including a real time service, such as a Voice over IP (VoIP), through an Internet protocol are serviced through a shared channel, an apparatus for collecting and scheduling status information of UEs 100 is needed, and the ENB 130 serves as this apparatus.

The S-GW 140 is a device for providing a data bearer, and generates or removes the data bearer under a control of the MME 150.

The MME 150 is a device in charge of performing various types of control functions and one MME may be connected to a plurality of ENBs.

The PCRF 120 is an entity for controlling QoS and charging of the traffic.

The RAN is needed to transmit/receive data to/from the user within limited frequencies. When users within a cell managed by a RAN node increase or traffic transmitted/received by the users increases, a congestion status may occurs in the RAN. In order to manage such an RAN congestion status (hereinafter used interchangeably with the term "user plane congestion status") without deteriorating the quality of service experienced by the user in the RAN congestion status, a congestion control taking account of user characteristics or service applications is needed.

System components capable of independently performing an operation to deal with the congestion status may include a UE, a communication network, and a server that transmits traffic.

In the RAN congestion status, when a system component performing the congestion control is not the RAN node, RAN congestion information should be transmitted to a component performing the congestion control. However, since the RAN congestion status may vary depending on time, if the congestion status is changed in a plurality of RAN nodes, information exchange is frequently made according to the change in the congestion status, and accordingly, system loads may become large.

Meanwhile, when the congestion control is applied to the network congestion status, whether to transmit data packets and orders of the data packets may be generally determined through a priority considering both a communication system status and a user status. During such a process, the user status, that is, an application or a service used by the user and whether traffic containing information which the user should immediately identify has been generated should be considered.

The present disclosure has been made to the issue and provides an effective congestion control method.

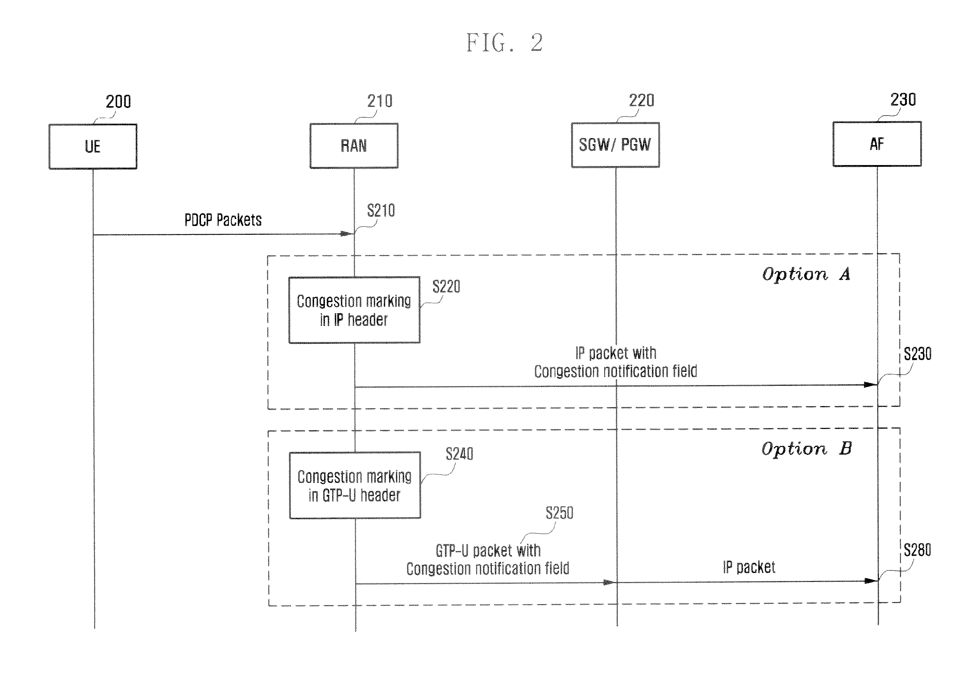

FIG. 2 illustrates a method for transmitting congestion information by using a user plane according to an embodiment of the present disclosure.

Referring to FIG. 2, when a RAN node 210 in the congestion status receives a user data packet (transmitted through a Packet Data Convergence Protocol (PDCP) layer between the UE and the RAN node) from a UE 200 in operation S210, the following two methods can be used to inform of the congestion status through the user plane.

A first method (option A) uses an Internet Protocol (IP) header. For example, when the RAN node 210 receives the PDCP packet, the RAN node 210 extracts an IP packet from the PDCP packet and inserts information related to the congestion (information on whether the congestion exists, a degree of the congestion, and the like) into an IP header in operation S220 before transmitting the IP packet to a GW 220 (i.e., an SGW or a PGW through the SGW). When transmission of the information on whether the congestion exists is needed, an Explicit Congestion Notification (ECN) marking may be simply applied to the IP header.

When transmission of the information on the degree of the congestion (a relative severity of the congestion, a maximum supportable transmission rate, and the like) is needed, an extension header including the degree of the congestion may be included. When the IP packet including the congestion information arrives at one node located at a transmission path, it may be determined whether to include the same congestion information in the IP header in a next hop transmission.

The UE 200 may transmit the IP packet with the congestion related information marking to an AF 230 in operation S230.

The other method (option B) uses a GPRS Tunneling Protocol-User Plane (GTP-U) header. For example, an IP packet is transmitted through a GTP-U tunnel when the packet is transmitted within a network, and a GTP-U header is added to the IP packet for the tunneling. For example, the RAN node 210 receives a packet from the UE 200, and transmits the received packet with the GTP-U header to the SGW 220 and it is equally applied to communication between the SGW and the PGW.

When the congestion is generated, the RAN node 210 inserts the congestion information (information on whether the congestion exists or the congestion degree) into the GTP-U header in operation S240 and transmits the IP packet to next nodes in operations S250 and S260.

At this time, the congestion information inserted into the GTP-U header may be transmitted using a Service Class Indicator (SCI) field of the GTP-U header or the congestion information may be inserted into a separate congestion notification extension header and then transmitted.

When the SCI is used, nodes (RAN node and SGW/PGW) exchanging the GTP-U packet may inform of or determine the congestion status according to an SCI value based on pre-arranged and/or pre-configured information.

For example, SCI 0 may be used to indicate a state where there is no congestion and SCI 1 may be used to indicate a state where congestion exists. Further, SCI 3 may be used to indicate a demand for limiting a transmission rate to 50 kbps due to generation of the congestion. For example, the SCI may be used as an indicator to indicate a congestion status, a control demand of a particular user/service, and a parameter.

Meanwhile, when an uplink packet is not generated for a long time even though the congestion is generated, the RAN node may generate a dummy packet (which does not need an actual payload), adds the GUP-U header including the information to the dummy packet, and transmit the dummy packet to the S-GW. In this case, information informing that the currently transmitted GTP-U packet is the dummy packet may be included.

The node having received the information analyzes a meaning of the SCI value to perform an operation of controlling the congestion, that is, an operation of determining whether to perform transmission/determining transmission orders and changing a traffic transmission parameter or transmitting congestion information to another node.

In the above embodiment of the present disclosure, transmission of the congestion information by using the user plane is made based on a congestion information marking on the IP header or the GTP-U header by the node, and the RAN node 210 generally has no information related to a service application being executed by the UE in many cases. In this case, the RAN node may simply apply the congestion information marking to all generated packets or randomly extracted packets.

Such a method which can be used without a particular reference has a problem of increasing processing loads of the RAN node and increasing a header size. Another problem is that, when the congestion information is transmitted up to the AF (i.e., a server generally existing in the PDN) 230. indiscriminately generated congestion information may be transmitted up to even an AF which has not properly come to an agreement for the congestion control. In this case, the congestion control may be made in an unintended form, for example, a situation may occur in which a 3GPP service provider expects to reduce a transmission rate based on the congestion information but the AF blocks a service itself.

When the UE is in a roaming state or receives a service from a RAN shared network, a situation similar to the above situation may occur. For example, a RAN node connected to the user has a function of inserting the congestion information into a packet and transmitting the packet. However, a core network node (for example, a PGW) may not support such a function or may support but not apply the function. In this case, the core network node may ignore the congestion information included in a user data packet (i.e., a GTP-U header or an IP header). However, at this time, an increase of a packet size or a packet processing load of the RAN node cannot be avoided. Alternatively, when the UE is in the roaming state and a PDN connection is configured as a home routed state, the RAN node pertains to a Visited Public Land Mobile Network (PLMN) (VPLMN, a roaming service provider) and the P-G W pertains to a Home PLMN (HPLMN, an original service provider). At this time, the VPLMN is needed to not expose its own congestion status to the HPLMN.

In order to address the above issue, the present disclosure provides a method for determining whether the congestion information is needed for each Evolved Packet System (EPS) bearer, each Access Point Name (APN), or each PDN connection.

When the core network generates a PDN connection or an EPS bearer based on subscription information or service application information, the core network configures whether congestion information can be transmitted to packets included in the corresponding PDN connection or EPS bearer. Based on the configuration, the RAN node determines whether to apply the congestion information marking when the congestion is generated.

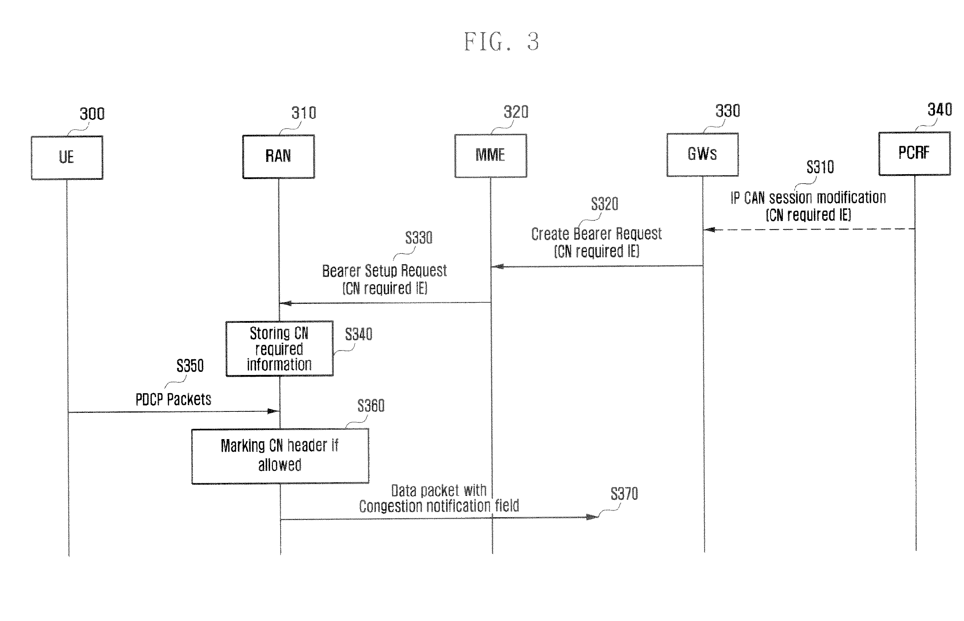

FIG. 3 illustrates a method for instructing a RAN node whether to apply a congestion information marking when congestion is generated according to an embodiment of the present disclosure.

Referring to FIG. 3, a core network node, for example, a PCRF 340 informs a RAN node 310, through a control plane message, of a whether congestion information marking (that is, congestion notification) is required (congestion information marking application information) when an EPS bearer (or PDN connection) is generated. For example, as illustrated in FIG. 3, the PCRF 340 transmits an IP Connectivity Access Network (CAN) modification message including a congestion information marking application field (CN needed Information Element (IE)) to a GW 330 in operation S310 and the GW 330 transmits a bearer generation request message (create bearer request) including the congestion information marking application field (CN needed IE) to an MME 320 in operation S320. Thereafter, the MME 320 transmits a bearer setup request message (bearer setup request) including the CN needed IE or an initial context setup request message (initial context setup request) to the RAN node 310 in operation S330.

Meanwhile, after the PGW 330 configures the information on whether to apply the congestion information marking based on the information received from the PCRF 340, the information may be transmitted to the RAN node 310 via the SGW 330 and the MME 320 or the information may be configured by the MME 320 according to subscription information or a QoS configuration and then transmitted to the RAN node 310.

The RAN node 310 having received the bearer setup request message stores the bearer setup request message in operation S340. Thereafter, when a packet included in the corresponding EPS bearer arrives in operation S350, the RAN node 310 determines whether to mark the congestion status information in operation S360. Alternatively, the RAN node 310 may determine whether to transmit the congestion status information of the corresponding EPS bearer when a congestion status report is needed in operation S370.

Meanwhile, in the above embodiment, when a unit of the control of the congestion information marking is a PDN connection, information on whether the congestion notification is required(congestion notification required indication) may be transmitted to the RAN node 310 in an operation of configuring a default bearer (that is, the create bearer request message is replaced with a create session request message in operation S320). Thereafter, the RAN node 310 may apply the congestion information marking applied to the default bearer to all bearers included in the corresponding PDN connection.

Meanwhile, when a unit of the control of the congestion information marking is an EPS bearer, the core network node may configure whether to perform the congestion information marking whenever the EPS bearer is configured and/or modified. The congestion information marking of the RAN node follows the setup of each EPS bearer.

Meanwhile, the MME stores information on whether the congestion notification is required for each bearer or each PDN connection during such a process. Further, the MME may determine and store whether a congestion information report function using a user packet is sued for each core network node (for example, PGW) during the process. Thereafter, when a PDN connection or a bearer of the UE using the same core network node (for example, PGW) is generated, even though explicit information on whether the congestion information is used is not received from the core network node, the MME may apply the same configuration to inform the RAN node of the information on whether the congestion information is used. At this time, similar to the above embodiment, an S1 bearer setup request message (S1 bearer setup request) (or S1 initial context setup request message) may be used.

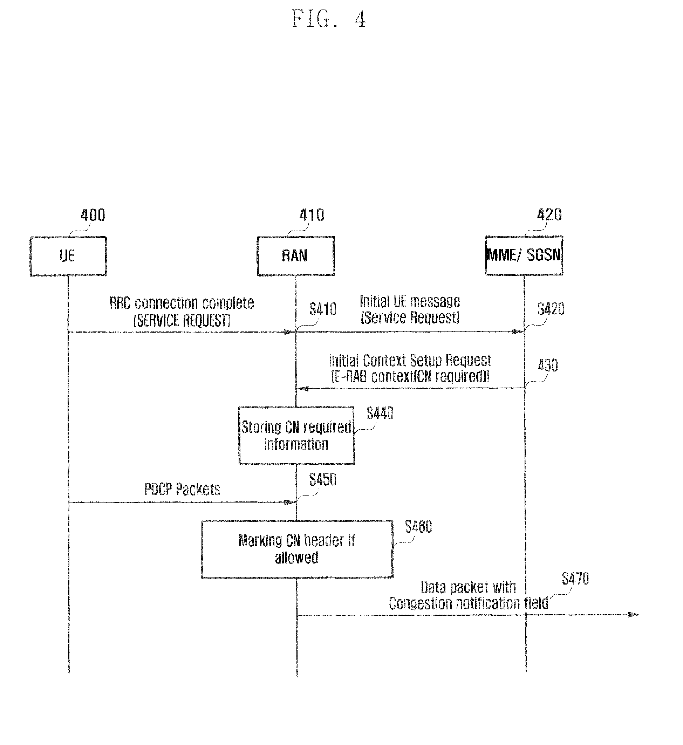

FIG. 4 is a flowchart illustrating a method in which, when a UE in an idle mode is switched to a connected mode, the UE transmits information on whether a congestion notification is required to a RAN node according to an embodiment of the present disclosure.

Referring to FIG. 4, a UE 400 transmits an RRC connection complete message (RRC connection complete) including a service request to a RAN node 410 to switch from an idle mode to a connected mode in operation S410 and the RAN node 410 transmits an initial UE message including the service request to an MME 420 in operation S420.

Thereafter, when a core network node (for example, MME) 420 receives the service request from the UE 400 and configures a bearer context in the RAN node 410, the core network node may configure whether the congestion notification is required in an initial context setup request through bearer information and transmit the initial context setup request in operation S430. More specifically, such a method may be implemented by adding one field (for example, CN needed) indicating whether the congestion notification is required to E-RAB to be setup item IEs of the initial context setup request message.

Thereafter, the RAN node 410 stores information on whether the congestion notification is required in operation S440. Thereafter, when the RAN node 410 receives a PDCP packet from the UE 400 in operation S450, the RAN node 410 determines whether congestion notification is required in operation S460 and transmits a data packet with the congestion information marking to a next node in operation S470. Alternatively, the RAN node 410 may determine whether to transmit the congestion status information of the corresponding EPS bearer when a congestion status report is needed.

In the above various embodiments, the indicator (for example, CN needed IE) indicating whether the core network node needs the congestion information may be replaced with an indicator (for example, home routed indicator) indicating whether the generated PDN connection or EPS bearer is home routed or local breakout. When the UE 400 is in the roaming status, the RAN node 410 or the core network node (for example, S-GW) having received the information indicating whether the PDN connection or the EPS bearer is home routed may implicitly know that the congestion information should not be transmitted.

In a method according to an embodiment of the present disclosure, an application of the indiscriminate congestion information marking by the RAN node 410 can be prevented but there is a limitation in that a minimum discrimination unit is the EPS bearer.

When a plurality of IP flows are transmitted to one EPS bearer and a particular IP flow among them needs a congestion information exchange, the method according to the above embodiment may not be preferable.

According to another embodiment of the present disclosure, in order to address the issue, when the core network informs the UE 400 of whether the congestion notification is required for each packet filter included in a traffic Flow Template (TFT) in generation of the EPS bearer (or PDN connection) and the UE 400 informs the RAN node 410, through a packet transmitted to the RAN node 410, of whether the congestion information marking of a matching packet filter is performed in generation of the packet, the RAN node 410 determines whether to perform the congestion information marking on the corresponding packet.

When there is an indicator indicating permission of the congestion information marking on a header of the packet received from the UE 400, the RAN node 410 may perform the congestion information marking on a GTP-U header or an IP header.

According to such a method, the UE 400 may discriminate the IP flows even within the EPS bearer through the packet filter received from the core network.

To sum up, it may be determined whether to perform the congestion information marking through the packet filter for each IP flow.

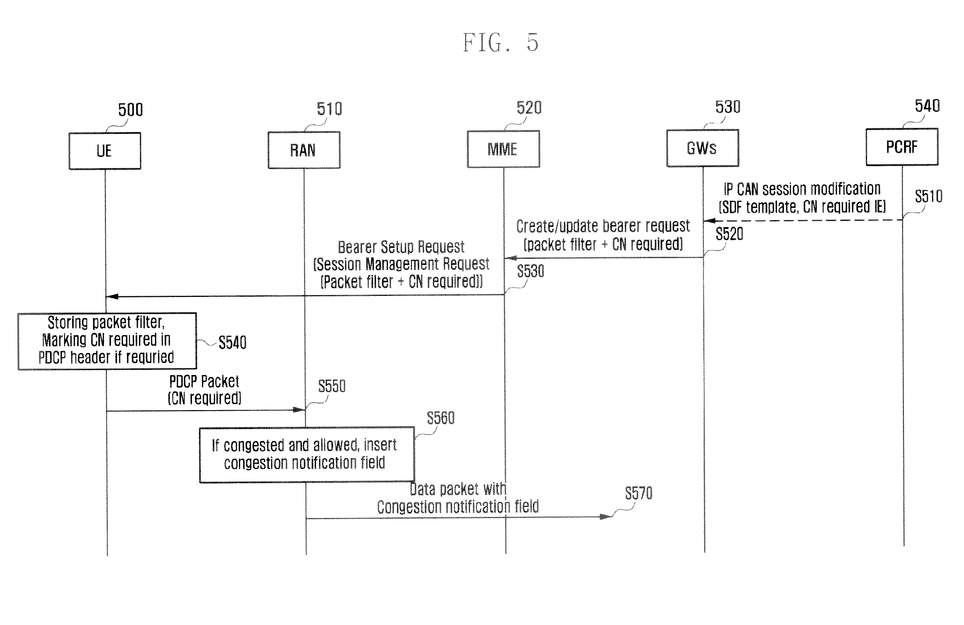

FIG. 5 illustrates an operation for determining whether to apply congestion information marking through a packet filter for each IP flow according to an embodiment of the present disclosure.

Referring to FIG. 5, a PCRF 540 may insert SDF template information and information on whether to perform the congestion information marking into an IP CAN session modification message and transmit the IP CAN session modification message to a PGW 530 in operation S510. Thereafter, the PGW 530 may insert a set of packet filters or a TFT into a bearer creation (update) request (create (update) bearer request) message for a bearer creation (modification) process in operation S520. At this time, information on an application of the congestion information marking for IP flows matching the corresponding filter may be added to each packet filter.

When an MME 520 having received the message transmits an EPS Session Management (ESM) message, for example, an activation dedicated bearer request (activate dedicate bearer request) message to a UE 500, the MME 520 also transmits the received packet filter, the TFT, or the information on whether the congestion notification is required in operation 530.

In operation S540, the UE 500 having received the message stores the packet filter and the information on whether to perform the congestion information marking. Further, when the packet of the IP flows is generated, the UE 500 identifies whether the congestion notification is required when the packet filters are used for bearer mapping in operation S540.

When it is configured such that the congestion notification is required for the matching filter, the UE 500 inserts the information on whether the congestion notification is required into a header or a control field attached when the packet is transmitted to the RAN node 510, for example, a PDCP header or a MAC Control Element (CE) and transmits the PDCP header or the MAC CE in operation S550. Meanwhile, in addition to the above, the UE 500 inserts information on whether the corresponding packet is attended or unattended traffic into the PDCP header or the MAC CE and transmits the PDCP header or the MAC CE.

The RAN node 510 having received the PDCP header or the MAC CE performs the congestion information marking on the GTP-U or IP header for the packet configured to need the congestion information marking and transmits the packet in operation S560.

Meanwhile, when the RAN node 510 receives the PDCP packet including the information indicating that the congestion information marking is needed once, the RAN node 510 may apply the congestion information marking to the packets included in the same IP flow in operation S570 even though the information on whether the congestion notification is required is not explicitly expressed in the received PDCP packet. When the packet received from the UE includes information on whether the packet is attended or unattended traffic, the RAN node may consider the information in a resource allocating or scheduling process.

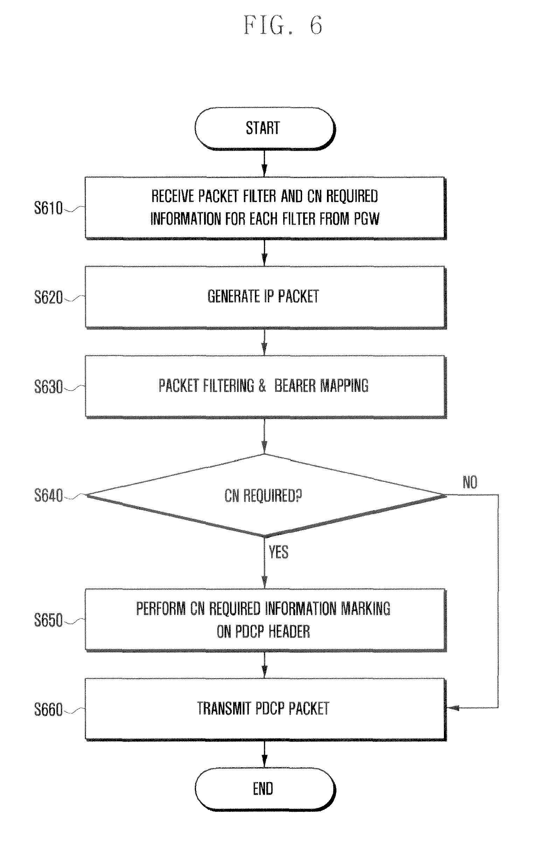

FIG. 6 is a flowchart illustrating an operation order of a UE according to an embodiment of the present disclosure.

Referring to FIG. 6, the UE receives a packet filter and information on whether the congestion information marking is applied to each packet filter from the PGW in operation S610.

Further, when the UE detects generation of an IP packet in operation S620, the UE performs packet filtering and bearer mapping in operation S630. Thereafter, the UE identifies whether the congestion notification is required for the corresponding IP packet in operation S640.

If required, the UE performs the congestion information marking on a PDCP header in operation S650 and transmits the PDCP packet to the RAN node in operation S660. The PDCP header is one embodiment of the present disclosure, and the UE may insert the information into any type of header or message transmitted to the RAN node.

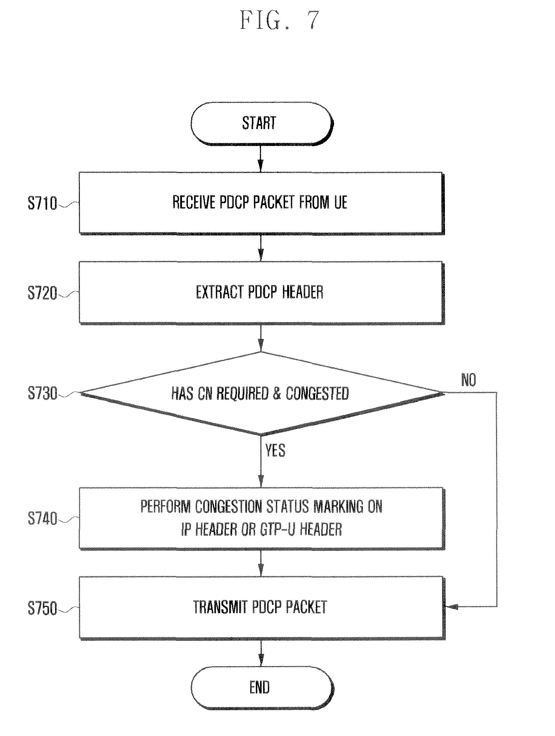

FIG. 7 is a flowchart illustrating an operation order of a RAN node, that is, an ENB according to an embodiment of the present disclosure.

Referring to FIG. 7, the ENB receives a PDCP packet from the UE. The ENB extracts a PDCP header in operation S720.

The ENB identifies whether the congestion notification is required for the packet and whether the ENB is currently in a congestion status in operation S730.

When the congestion notification is required and the ENB is in the congestion status, the ENB performs the congestion information marking on an IP header or a GTP-U header in operation S740.

Thereafter, the ENB transmits the PDCP packet to a next node, for example, a node, such as the SGW, in operation S750.

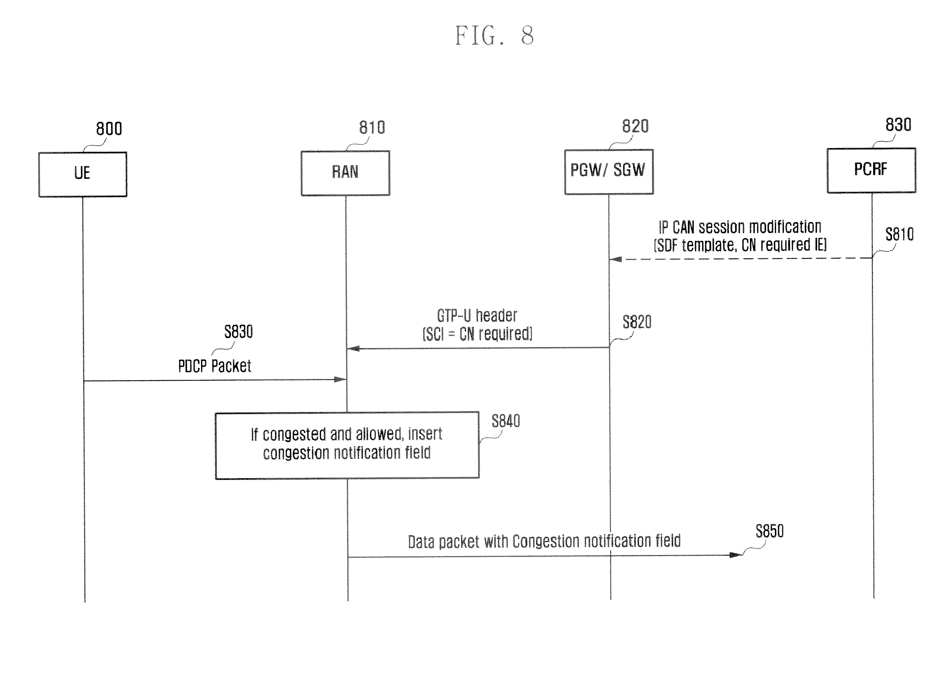

Meanwhile, an operation of configuring the RAN node to apply the congestion information marking to a particular IP flow may be implemented using a method in which a GW node informs of it by using the GTP-U header and the method will be described through FIG. 8.

FIG. 8 is a flowchart illustrating a process of configuring a RAN node to apply congestion information marking to a particular IP flow according to an embodiment of the present disclosure.

Referring to FIG. 8, a PCRF 830 may and transmit the IP CAN session modification message to a PGW 820 in operation S810. When the congestion information is needed for a particular IP flow, the PGW 820 may add an indicator indicating that the congestion information marking is needed for a packet, which will be transmitted later, to a header of a GTP-U packet transmitted to a RAN node 810 in operation S820.

The information may be transmitted by inserting a separate extension header indicating the need for congestion notification into the GTP-U header or transmitted by using one SCI value pre-arranged between the RAN node 810 and the GW 820.

For example, the method for transmitting the information by using one pre-arranged SCI value will be described. When the SCI value is "1", the RAN node 810 applies the congestion information marking to uplink packets included in the bearer or the IP flow, such as the corresponding GTP-U packet. When the SCI value is "0", the RAN node 810 may use a method for not applying the congestion information marking.

Through the above method, when the PG W 820 is configured such that the RAN node 810 applies the congestion information marking to a particular IP flow, the RAN node 810 stores information thereof (not shown).

When the RAN node 810 receives the PDCP packet from a UE 800 in operation S830, the RAN node 810 determines whether the congestion occurs and whether the congestion information marking is allowed, and then marks information on whether the congestion occurs on a congestion notification field according to a result thereof in operation S840.

Further, the RAN node 810 transmits a data packet to a next node, for example, the SG W in operation S850.

Meanwhile, the core network node may inform the RAN node 810 of whether to use a congestion information report using a user data packet through a GTP message. For example, when the RAN node 810 inserts the data packet including the congestion information even though the congestion information is not needed, the core network node may inform that the congestion information is not needed by using a GTP message and thus causes the RAN node 810 to not insert the congestion information any more.

The message used at this time may be one of GTP-C path management messages, for example, a congestion notification needed message.

In contrast, when the congestion information is not transmitted even though the congestion information is needed, the core network node may instruct the RAN node to insert the congestion information into the data packet through the GTP message. The message used at this time may be one of GTP-C path management messages, for example, a congestion notification not needed message. When the PGW transmits the GTP message, the SGW analyzes the GTP message to apply a result of the analysis to a message which the SGW transmits to the PGW (the congestion information may be added or removed according to the existence of the congestion information) and transmits a message informing of a request of the PGW to the corresponding RAN node.

Meanwhile, whether to transmit the congestion status of the RAN node to another core network node may be determined by a service provider providing a current service. A network entity (for example, RAN node or S-GW) of a service provider (referred to as a serving RLMN, and corresponding to a visited PLMN when in a roaming status) providing an access network service to the UE may not transmit RAN congestion status information for the UE to another core network entity (for example, P-GW) when a service provider (home PLMN) which the user joins is different from the service provider itself (serving PLMN). At this time, an HPLMN ID of the UE and an ID of the serving PLMN including the network entity may be compared. Alternatively, the network entity of the serving PLMN may determine whether to transmit the congestion information by comparing the HPLMN ID of the UE and a list of PLMNs allowing or not allowing the congestion information. The HPLMN ID of the UE may be included in a part of an International Mobile Subscriber Identity (IMSI). Whether to transmit/not transmit the congestion information for each PLMN may be configured to the network entity by an O&M method. When it is configured to not transmit the congestion information, if the congestion information received from the RAN node is transmitted by a control message, the core network entity (for example, S-GW) may not transmit the congestion information to another core network entity (for example, P-GW). Alternatively, when the congestion information is included in a packet header, the core network entity (for example, S-GW) may remove the congestion information from header information and then transmit the packet header to another core network entity (for example, P-GW). This is to allow the PLMN possessing the RAN node to prevent the congestion status from being exposed to the PLMN possessing the P-GW or to avoid overhead providing information which will not be used.

Further, the core network entity (for example, S-GW) may apply a congestion control according to the congestion status received from the RAN node and the HPLMN of the UE. For example, the S-GW may have a congestion control policy configured for each PLMN through an O&M method. The S-G W having received the congestion status information from the RAN node does not transmit the congestion information to the P-GW according to the above embodiment but may find a congestion control policy for each PLMN corresponding to the HPLMN of the UE and apply the congestion control to the found congestion control policy. More specifically, the S-GW may have one or more configured congestion control policies below.

### PLMN, RAN congestion status, and Traffic shaping rule

The PLMN corresponds to a PLMN ID, the RAN congestion status simply indicates whether the congestion of the RAN exists or a congestion degree of the RAN (for example, low, medium, high, and the like), and the traffic shaping rule indicates a congestion control policy to be applied to traffic of the UE when the RLMN and the RAN congestion status are satisfied. For example, the congestion control policy may drop a packet or adjust a transmission rate to X bps.

Further, the above various embodiments may be applied when a form of the PDN connection or the EPS bearer is recognized as being home routed according to the above described embodiment instead of comparison of the PLMN ID.

Meanwhile, the core network node may inform, through a part of QoS parameters, whether to transmit a congestion status report to the RAN node by using a user data packet header. For example, the RAN node and the core network node use a QoS Class Identifier (QCI), an Allocation and Retention Priority (ARP), and the like, as the QoS parameters for the EPS bearer. When the QoS parameters have particular values or are within a range of particular values, the RAN node determines that it is needed to inform of the congestion status by using the user data packet.

More specifically, for example, when the core network node (for example, PGW) desires to receive a congestion status report of the RAN through a user data packet header (GTP-U header or IP header), the core network node may configure the ARP (or QCI) of the generated EPS bearer as a particular value or configure the ARP (or QCI) to be included in a particular range. RAN node configuring the QoS parameter (for example, an ARP/QCI value or range indicating that the congestion information is needed) may compare a received EPS bearer QoS parameter with the configuration information (ARP/QCI value or range), so as to determine whether the congestion information should be inserted into a packet to be transmitted to the core network node. When it is determined that the congestion information is needed, the congestion information may be inserted into the packet transmitted to the core network node.

Meanwhile, according to another embodiment of the present disclosure, the core network node (for example, a Policy and Charging Enforcement Function (PCEF) or a Trusted Data Format (TDF)) having received the congestion information of the RAN node may perform congestion mitigation. At this time, the core network node may determine how to process traffic according to the congestion status.

The PCRF providing a rule (for example, a PCC rule or an Application and Device Control (ADC) rule) to the core network node (for example, PCEF or TDF) may generate a rule configuring a policy of an operation of the core network node according to a congestion status condition and transmit the generated rule to the core network node. When the PCRF determines the operation rule according to the congestion status condition to be used by the core network node, the PCRF may consider subscription data of the user, such as a membership level and/or a type of application.

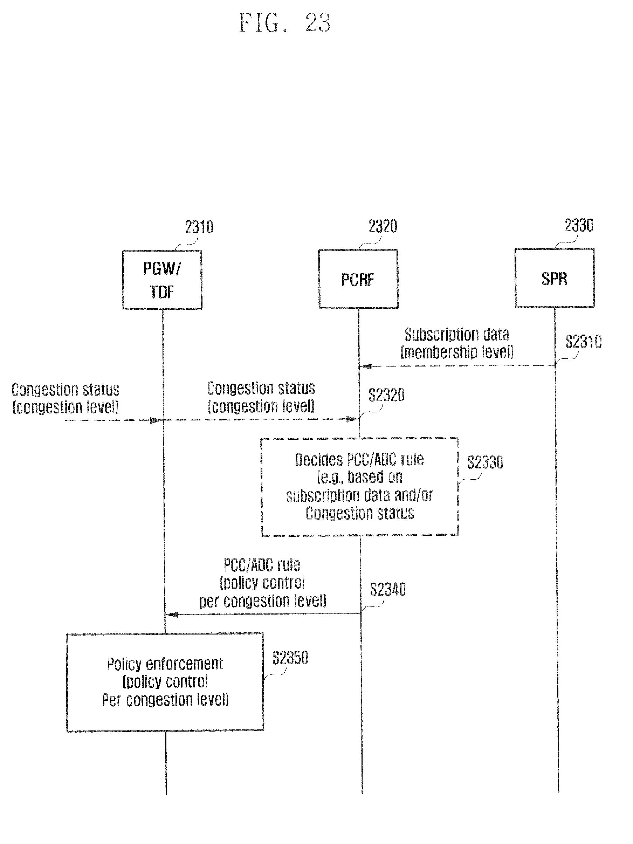

FIG. 23 illustrates a congestion control operation according to an embodiment of the present disclosure.

Referring to FIG. 23, a PCRF 2320 generates a rule to be transmitted to the core network node as illustrated in operation S2330. At this time, when the PCRF 2320 receives in advance the congestion information (congestion status), such as a congestion level in operation S2320, the PCRF 2320 may consider the congestion information (congestion status) in generating the rule. Further, when the PCRF 2320 has the subscription data of the user, such as the membership level received from a Subscriber Profile Repository (SPR) 2330 or a Home Subscriber Server (HSS) in operation S2310, the PCRF 2320 may consider the subscription data of the user in generating the rule.

The rule based on the congestion status generated by the PCRF 2320 may include information for detecting a data flow and policy control information to be applied to the data flow. An operation of processing the data flow according to a congestion status condition may be stated in the policy control information.
The policy control may include a gate status indicating whether to transmit the data flow and a maximum/guaranteed bitrate (uplink/downlink) to be applied to the data flow, and the policy control information may be expanded to a form applied by the congestion status condition. When the congestion status condition is included in the policy control, the core network entity applies the corresponding policy (gate status or bitrate) to a status satisfying the congestion status condition.

### Policy control

{Priority 1, load level > X, gate status = open, DL-maximum bitrate= 50kbps, UL-maximum bitrate = 50kbps}
{Priority 2, load level > Y, gate status = open, DL-maximum bitrate= 30kbps, UL-maximum bitrate = 30kbps}
{Priority 3, load level > Z, gate status = closed, DL-maximum bitrate= 30kbps, UL-maximum bitrate = 30kbps}

For example, when the congestion level using the policy control is higher than or equal to X, the PCRF limits a maximum uplink/downlink bitrate of the data flow to 50 kbps. When the congestion level is higher than or equal to Z, the PCRF may change a gate status of the data flow into a closed status.

For example, the PCRF may configure a rule such that the core network entity (for example, PCEF or TDF) performs an operation when the congestion status reaches a certain degree. The rule may be made based on the subscription data of the UE or service and/or application characteristics. For example, when the membership level of the user is higher (for example, gold membership), the rule may be configured to not limit the bitrate even though the congestion is generated. When, the membership level is low, the rule may be configured to limit the bitrate even in a relatively non-serious congestion status. An operation and/or setup according to the congestion status condition may have a relative priority. Such a configuration is an example for describing a concept of the present disclosure, and a main concept and operation of the present disclosure is not limited to a structure of particular fields of the rule but may be applied to a similar structure without a large change.

Meanwhile, the core network entity (for example, a P-GW or a TDF 2310) may inform the service or application characteristics detected by the core network entity itself through a GTP-U header of the data packet transmitted to the RAN node in order to know the service or application including the user data. In order to detect the service or application characteristics of the user data packet, the core network entity should perform a deep packet inspection which is performed using resources of the core network entity. Accordingly, service characteristic detection and marking performed by the core network node needs to be variably applied according to the congestion status.

For example, the core network node may allow the RAN node to perform effective scheduling by performing the service characteristic detection and marking on the packet transmitted through a congested RAN and not performing the service characteristic detection on the packet through the non-congested RAN, thereby reducing an unnecessary load.

The PCRF 2320 may generate the rule (for example, PCC rule or ADC rule) configuring an operation of the core network entity (for example, the P-GW or the TDF 2310) and provide the generated rule in operation S2340. For example, the PCRF may make and provide the rule to control the service characteristic detection and marking according to the RAN congestion status. At this time, the subscription data of the UE, such as the membership level may be also considered.

The core network entity having received the PCC rule or the ADC rule from the PCRF 2320 may control the congestion according to the received rule in operation S2350.

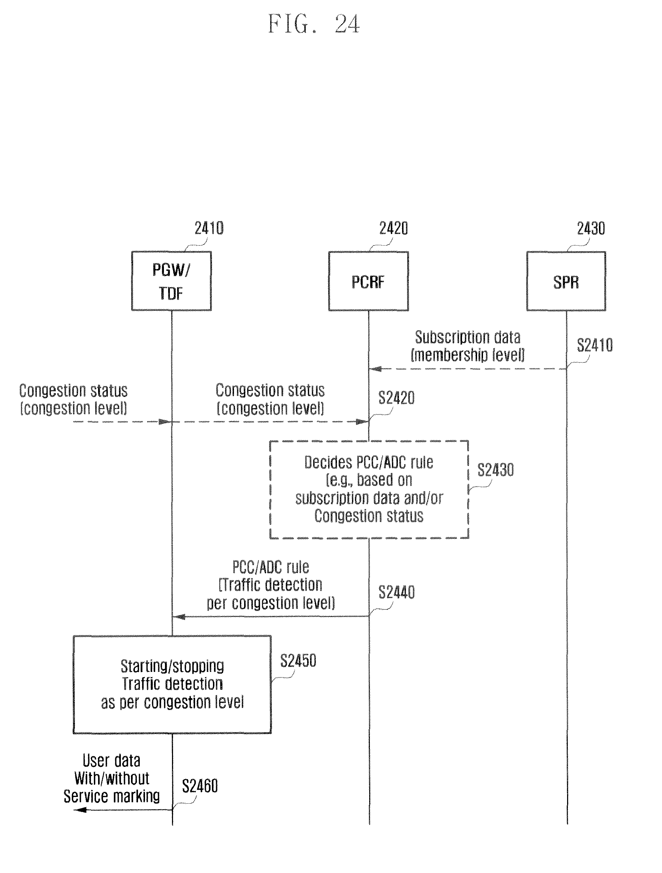

FIG. 24 is a flowchart illustrating a congestion control operation according to an embodiment of the present disclosure.

Referring to FIG. 24, a PCRF 2420 generates a rule (ACC or ADC rule) to be transmitted to the core network node in operation S2430. At this time, when the PCRF 2420 receives in advance the congestion information (congestion status), such as the congestion level in operation S2420, the PCRF 2320 may consider the congestion information (congestion status) in generating the rule. Further, when the PCRF 2420 has the subscription data of the user, such as the membership level received from an SPR 2430 or HSS in operation S2410. the PCRF 2320 may consider the subscription data of the user in generating the rule.

The rule based on the congestion status generated by the PCRF 2420 may state the service characteristic detection and marking operation of the data flow according to the congestion status condition. For example, the rule may include information on whether the service characteristic detection and marking is needed according to the congestion status condition. When the rule includes the congestion status condition, the core network entity may perform the service characteristic detection and marking operation when the congestion status condition is satisfied.
{Priority 1, load level < X, service detection and marking = no}
{Priority 2, load level < Y, service detection and marking = yes}

For example, when the congestion level is equal to or lower than X, the PCRF 2420 may configure such that the core network entity does not perform an operation of detecting the service characteristic and inserting the service characteristic into the GTP-U header. Further, when the congestion level is higher than or equal to Y, the PCRF 2420 may configure such that the core network entity performs the operation of detecting the service characteristic and inserting the service characteristic into the GTP-U header.

For example, the PCRF may configure a rule such that the core network entity (for example, a P-GW or a TDF 2410) performs an operation when the congestion status reaches a certain degree. The rule may be made based on the subscription data of the UE or service and/or application characteristics. For example, when the membership level of the user is high (for example, gold membership), the service characteristic detection and marking is performed even when the congestion is not so high, so that the RAN node may perform an improved scheduling method considering the service characteristic. An operation and/or setup according to the congestion status condition may have a relative priority.

The PCRF 2420 may generate the rule (for example, PCC rule or ADC rule) configuring an operation of the core network entity (for example, the P-GW or the TDF 2410) and provides the generated rule in operation S2440. Thereafter, the core network entity 2410 may initiate and/or stop traffic detection according to each congestion level in operation S2450.

The core network entity 2410 may detect the service characteristic and may either perform the marking operation or not according to the received rule in operation S2460.

Such a configuration is an example for describing a concept of the present disclosure, and a main concept and operation of the present disclosure is not limited to a structure of particular fields of the rule but may be applied to a similar structure without a large change. Meanwhile, in a communication system, such as a general LTE system, data is transmitted and received through a bearer. The communication system has an advantage in that, even though a new IP flow starts, a control message for controlling the new IP flow is not needed to be transmitted and received between network entities if the data is transmitted and received.

However, there is a disadvantage in that it is difficult to differentially process a plurality of IPO flows transmitted through one bearer when the congestion is generated in the ENB. In order to address the above issue, services of the IP flows are distinguished by performing a traffic detection function existing after the P-GW or a deep packet inspection in the PGW, a Service Class Indicator (SCI) is marked on a GTP-U header with respect to the distinguished services, and the SCI marking is transmitted to the ENB via the SGW, so that the ENB may control scheduling as needed.

However, there is a problem in that the SCI marking and the scheduling according to the SCI marking are applied to all UEs in common.

Accordingly, another embodiment of the present disclosure provides a mechanism for differently applying the SCI marking according to each UE based on the subscription level of the user while not exchanging control messages whenever the IP flow is generated in order to use a new service.

In an embodiment of the present disclosure, IP flows subject to the deprioritization are defined as being within an unattended range and a UE context including an SCI range value for distinguishing the unattended and attended ranges according to a subscription level of the UE is transmitted to an ENB when the UE becomes in a connected mode.

When the ENB is in the congestion status, the ENB having received the context of the UE including the SCI range value distinguishing between unattended and attended IP flows distinguishes packets, classified as being unattended, subject to de-prioritization by using the context, stores them in a queue different from a queue of packets classified as being attended within the same bearer, and differentially processes scheduling for the packets in the unattended queue as the de-prioritization.

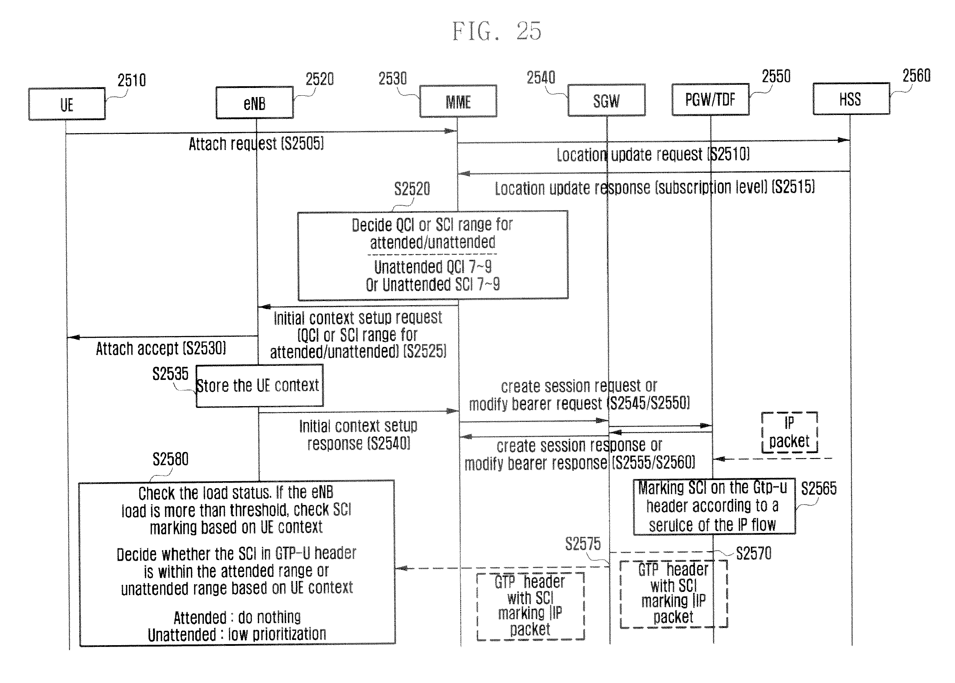

FIG. 25 is a flowchart illustrating a process of de-prioritizing a scheduling according to an SCI range value configured to a UE when an ENB is in a congestion status according to an embodiment of the present disclosure.

Referring to FIG. 25, a UE 2510 makes a request for switching to a connected mode for data transmission/reception by transmitting an attach request/service request/tracking area update request message including an active flag to an MME 2530 via an ENB 2520 in operation S2505.

When the MME 2530 having received the message receives the attach request or receives the tracking area update request when the context of the UE is not within the MME 2530, the MME 2530 transmits a location update request to an HSS 2560 in operation S2510 and receives a location update response including subscription data of the UE in operation S2515. At this time, the subscription data may include information on a subscription level (for example, high, medium, and low) of the corresponding UE.

When the UE corresponds to a roaming user, the MME 2530 determines an SCI or a QCI range to be classified as being unattended based on a contract relation with a home operator of the roaming user and the received subscription level in operation S2520. The SCI/QCI range determined for the UE is inserted into an initial UE context setup request message which configures context information of the UE in the ENB and then transmitted to the ENB 2520 in operation S2525.

When the MME 2530 transmits the initial UE context setup request message, the MME 2530 transmits an attach accept message to be transmitted to the UE 2510 to the ENB 2520 and the ENB 2520 transmits the attach accept message to the UE 2510 in operation S2530.

The ENB 2520 having received the SCI/QCI range value, classified as being unattended, determined for the UE 2510 stores the SCI/QCI range value as the context of the UE in operation S2535. Further, the ENB 2520 transmits an initial UE context setup response message to the MME 2530 in operation S2540. The MME 2530 having received the response from the ENB 2520 in operation S2540 transmits a create session request or a modify bearer request for transmitting data plane information of the EBN to an SGW 2540 to establish a data plane connected to the ENB and the SGW/PGW in operations S2545 and S2550. The SGW 2540 transmits the same message to a PGW 2550.

In response to the message, the PWG 2550 transmits a create session response or a modify bearer response to the SGW 2540. Thereafter, the SGW 2540 transmits the same message to the MME 2530, and thus a data plane for the UE 2510 is connected from the ENB via the SGW 2540/PGW 2550 in operations S2555 and S2560.

When data arrives from the outside after the establishment of the data plane for the UE 2510, the data is analyzed by the PGW/TDF 2550 and the SCI is marked on the GTP-U header according to a service of the IP flow in operation S2565. Further, the PGW 2550 transmits the marked IP packet to the SGW 2540 in operation 2570.

Thereafter, the SGW 2540 marks the received SCI on the GTP-U directly transmitted to the ENB and transmits the corresponding data to the ENB 2520 in operation S2575.

The ENB 2520 having received the data including the SCI marking identifies the congestion status of the data plane and then identifies the UE context of the UE to receive the data if the data plane is in the congestion status in operation 2580. Further, the ENB 2520 identifies whether the received SCI is classified as being in the unattended range. When the SCI is classified as being in the unattended range, the ENB 2520 generates and processes a queue managed separately from other packets of the same bearer and thus the packets classitied as being in the unattended range are scheduled to be de-prioritized over the packets which are not classified as being within the unattended range.

Meanwhile, in another embodiment of the present disclosure, IP flows subject to the de-prioritization may be defined as being within the unattended range and an SCI range value for distinguishing the unattended and attended ranges according to the subscription level of the UE may be transmitted to the PGW marking the SCI. Thereafter, since the PGW starts the SCI marking when the unattended traffic is generated, load for the marking by the PGW may be reduced. Further, when the data packet including the SCI marked by the PGW arrives, scheduling may be differentially controlled such that traffic classified as being unattended according to a congestion degree of the ENB is distinguished by the existence or nonexistence of the SCI and corresponding packets are de-prioritized.

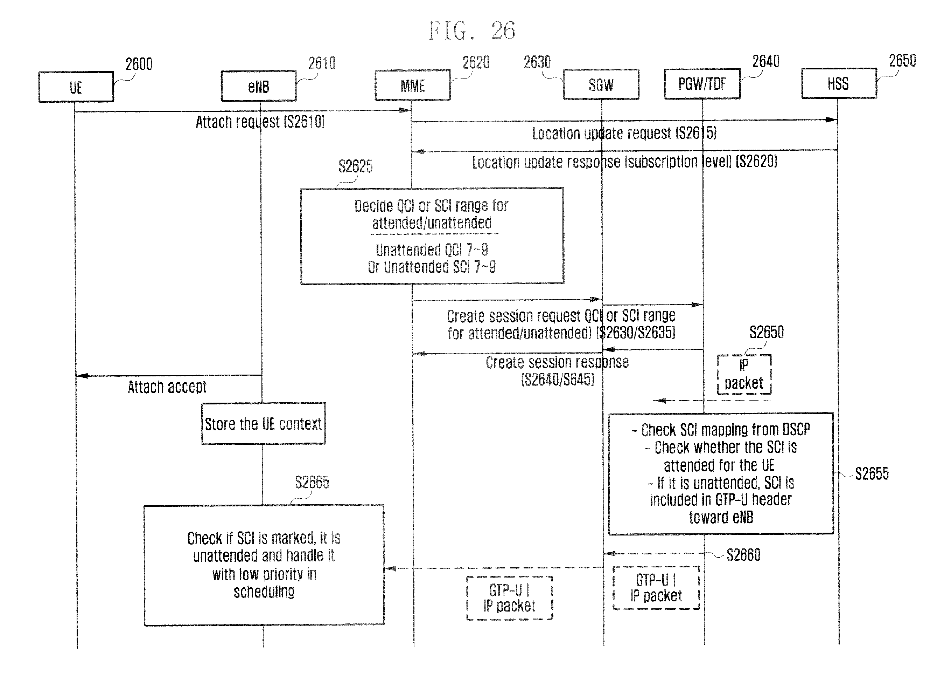

FIG. 26 is a flowchart illustrating an operation order according to an embodiment of the present disclosure.

Referring to FIG. 26, a UE 2600 makes a request for switching to a connected mode for data transmission/reception by transmitting an attach request/service request/tracking area update request message including an active flag to an MME 2620 via an ENB 2610 in operation 2610.

When the MME 2620 having received the message receives the attach request or receives the tracking area update request when the context of the UE does not exist in the MME 2620, the MME 2620 transmits a location update request to an HSS 2650 in operation S2615. Further, the MME 2620 receives a location update response including subscription data of the UE in operation S2620. At this time, the subscription data may include information on a subscription level (for example, high, medium, and low) of the UE.

When the UE corresponds to a roaming user, the MME 2620 may determine an SCI or a QCI range to be classified as being within an unattended range based on a contract relation with a home operator of the roaming user and the received subscription level in operation S2625.

The MME 2620 transmits information on the SCI or the QCI range to be processed as the unattended range to a PGW/TDF 2640 through a create session request via an SGW 2630 in operation S2630 and S2635. Further, the MME 2620 may configure the determined SCI/QCI range in the ENB during a process in which the context information of the UE is transmitted to the ENB through an initial context setup request message (not shown).

Thereafter, the PGW 2640 having received information on the SCI or CQI range to be processed as the unattended range from the MME 2620 stores the information and transmits a response to the request of the MME 2620 to the MME 2620 through a create session response in operations S2640 and S2645.

Thereafter, in operation S2650, when a data packet arrives from the outside, the PGW/TDF 2640 performs deep packet inspection and determines an ACI for the corresponding packet in operation S2655.

When the unattended range is determined as the QCI range, a bearer to which the corresponding packet will be transmitted is determined and then it is determined whether a QCI of the bearer corresponds to a QCI range to be classified as the unattended range. When the determined SCI/QCI is not within the SCI/QCI range considered as the unattended range, the PGW/TEF 2640 does not perform the SCI marking on the corresponding IP flow.

In contrast, when the determined SCI/QCI is within the SCI/QCI range considered as the unattended range, the PGW/TDF 2640 inserts the SCI marking on the corresponding IP flow into the GTP-U header and transmits the data to the ENB in operation S2660.

In operation S2665, the ENB 2610 having received the data including the SCI marking identifies a congestion status of a data plane. When the data plane is in the congestion status, the ENB 2610 identities whether the received SCI is classified as the unattended range with reference to the UE context of the UE to receive the data. When the SCI is classified as the unattended range, the ENB 2610 may generate and process a queue separately managed from other packets of the same bearer, so that the packets classified as the unattended range may be de-prioritized and scheduled over packets which are not classified as the unattended range within the same bearer.

Meanwhile, as described above, when the RAN congestion status is generated, it is needed to consider a status of the user (a type of service application being executed or whether the traffic is attended). Further, changing an operation parameter (for example, controlling a transmission rate) of the service application being executed by the UE according to the congestion status may be an effective congestion control method.

However, collecting status information of the UE and controlling the operation parameter by the service application according to the congestion status have difficulty in being performed by a control device.

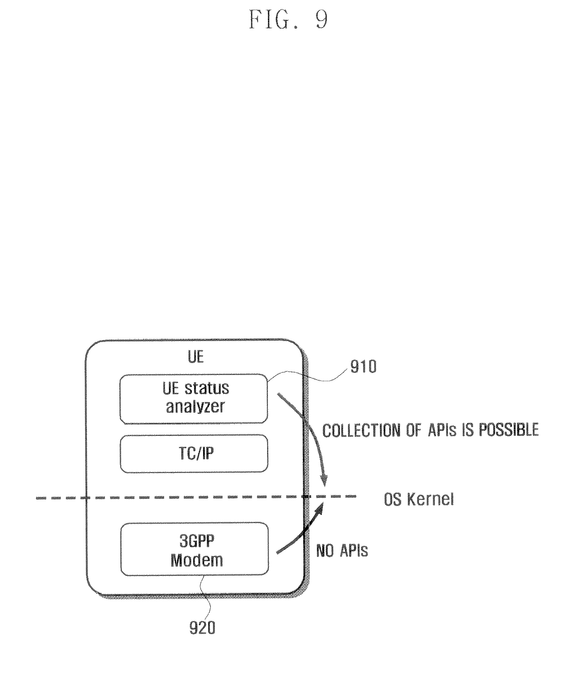

FIG. 9 illustrates an internal structure and an internal operation of a UE according to an embodiment of the present disclosure.

Referring to FIG. 9, it is effective to collect/change the status of the UE and the parameter of the service application by a service application (UE status analyzer 910) executed by an Operating System (OS) and an OS higher layer. It is because a transmission/reception and control device, such as a 3GPP modem 920 has difficulty in establishing an Application Programmable Interface (API) by which the OS can collect UE status information and configure the parameter of the service application.

Accordingly, another embodiment of the present disclosure described below provides a method for collecting and reporting status information of the UE and receiving the operation parameter of the service application from a network and configuring the received operation parameter.

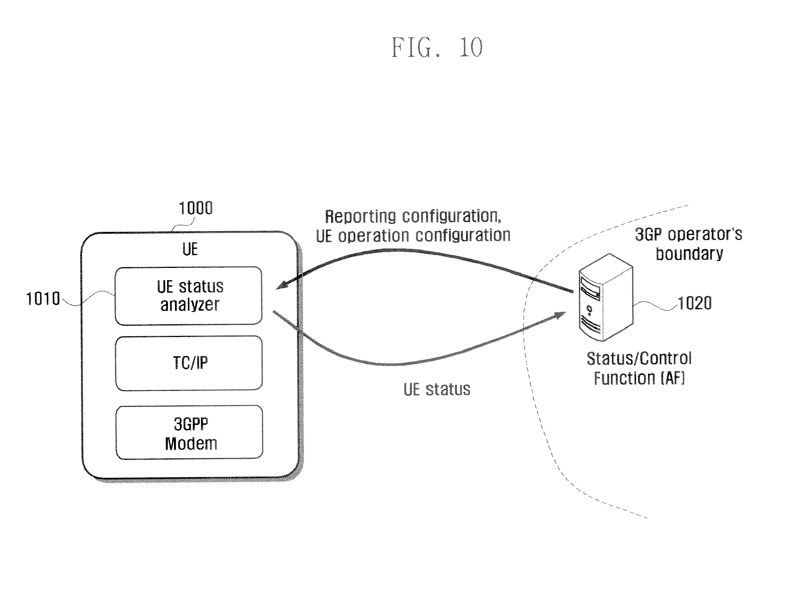

FIG. 10 illustrates concepts of a UE and a communication system according to an embodiment of the present disclosure.

Referring to FIG. 10, a UE status analyzer 1010 is installed (executed) in a UE 1000. The UE status analyzer may be implemented in an SW form or an HW form.

The UE status analyzer 1010 may collect status information of the UE through the OS and change another service application and an operation parameter of the UE. The UE status analyzer 1010 forms a connection with a Status/Control Function (SCF) 1020 existing in a service provider network to communicate with the SCF 1020. The SCF 1020 may be one AF existing in the PDN.

The SCF 1020 may set which status information of the UE should be reported to the UE status analyzer 1010 and a type and a period of the report. According to the setup, the UE status analyzer 1010 reports the status of the UE to the SCF 1020. Further, the SCF 1020 can set/change the UE and the operation parameter of the service application being executed by the UE through the UE status analyzer 1010.

In the following description of various embodiments of the present disclosure, the UE 1000 has a concept including the UE status analyzer 1010.

In order to perform the above operation, the UE 1000 may first discover the SCF 1020 and attempt an access. The discovery operation may be performed by providing the SCF 1020 which can be discovered when the UE 1000 is initially registered or attached in a service provider network.

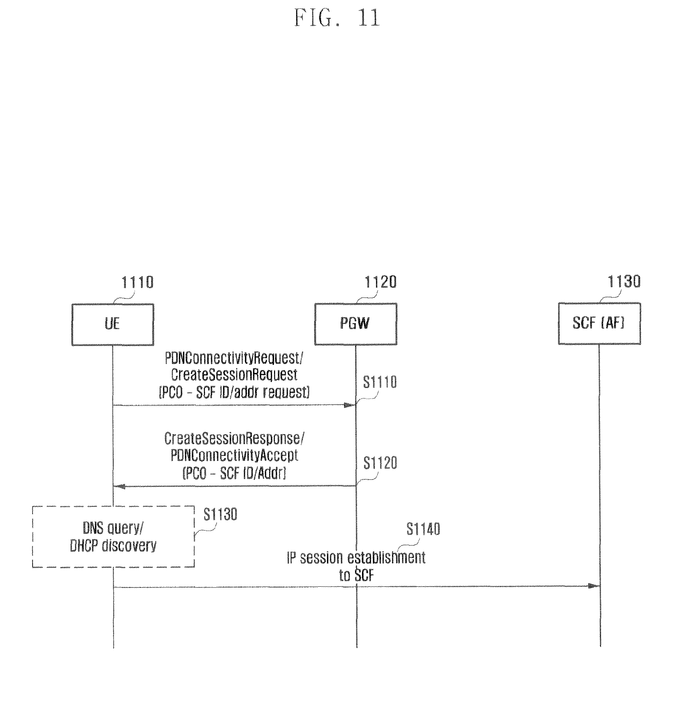

FIG. 11 illustrates an operation in which a UE may discover an SCF to access according to an embodiment of the present disclosure.

Referring to FIG. 11, a PGW 1120 transmits an address or an ID of an SCF 1130 to a UE 1110 through a Protocol Configuration Option (PCO) when a PDN connection is generated.

For example, the UE 1110 inserts the address or the ID (a Fully Qualified Domain Name (FQDN) or the like) of the SCF into an ESM request message (for example, a PDN connectivity request message or a create session request message) transmitted to an MME in operation S1110, the MME having received the ESM request message transmits the ESM request message to an SGW, and the SGW transmits a PCO to a PGW.

When the PGW 1120 transmits a response message (for example, a create session response message or a PDN connectivity accept message) of the received request message, the PGW 1120 inserts the PCO including an address or an ID of the SCF and transmits the PCO to the UE 1110 via the SGW and the MME in operation S1120.

When the address of the SCF is included in the PCO, the UE 1110 may access the SCF by using the address. When the ID of the SCF is included in the PCO, the UE 1110 may perform a Domain Name System (DNS) query or a Dynamic Host Configuration Protocol (DHCP) query by using the ID to figure out the address of the SCF in operation S 1130.

The UE 1110 having acquired the address of the SCF through such a process may establish an IP session with the SCF in operation S1140.

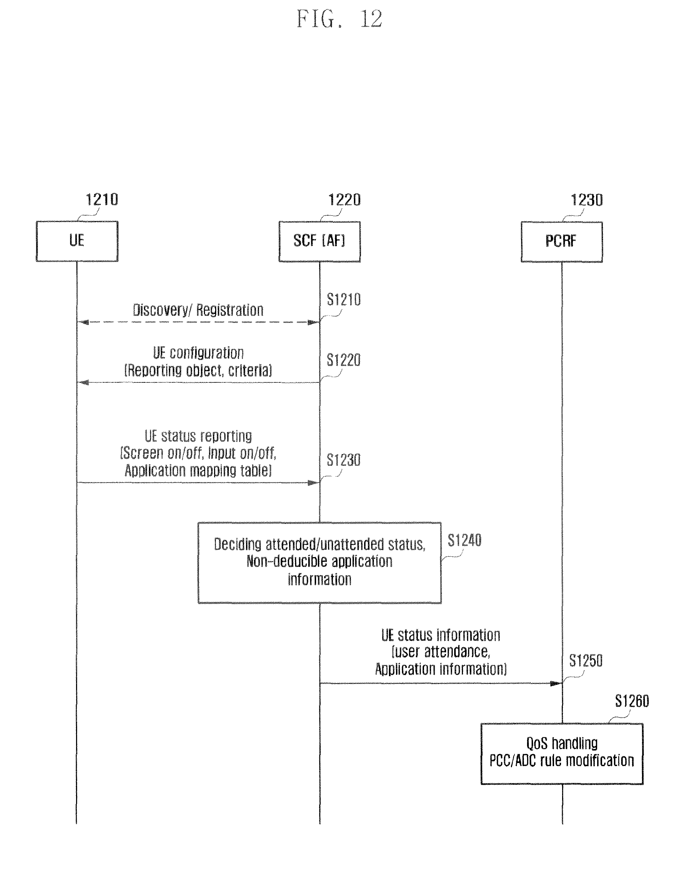

FIG. 12 is a flowchart illustrating a process in which an SCF configures a user status information report in a UE according to an embodiment of the present disclosure.

Referring to FIG. 12, a UE 1210 performs a process of accessing an SCF 1220 in operation S1210.

Thereafter, the SCF 1220 transmits a setup message indicating which information should be transmitted to the UE 1210 and a condition, a type, and/or a period of the report in operation S1220.

The status information which the UE 1210 can report may include information on whether a screen is turned on or off and a duration time thereof, information on whether a user input exists and a duration time thereof, an on/off of a Wireless Local Area Network (WLAN) (on/off status), service application being executed in the current UE, and I-5-tuple information.

The report condition indicates a condition by which particular information should be reported, for example, a condition by which an off status of the screen should be reported when the screen is turned off for five minutes.

The UE 1210 collects a status of the UE according to the setup and reports the status to the SCF 1220 in operation S1230.

The SCF 1220 having collected the status information from the UE 1210 may store the status information of the UE and change the setup of the report when needed or change an operation parameter of the UE in operation S1240.

Alternatively, as illustrated in operation S1250, the SCF 1220 may generate useful information of the 3GPP network based on the status information of the UE and transmit the information to a PCRF 1230 through an Rx interface.

For example, the SCF 1220 may transmit a service application being executed by the The 1210 and information (IP-5-tuple) for detecting IP flows thereof to the PCRF 1230 or inform the PCRF 1230 of information indicating whether a status of generated traffic is attended or unattended in general consideration of a type of service application being currently executed and whether the screen is turned on or off or whether there is an input.

The PCRF 1230 having received the information may perform a process of generating and/or changing a PCC or ADC rule in operation S1260.

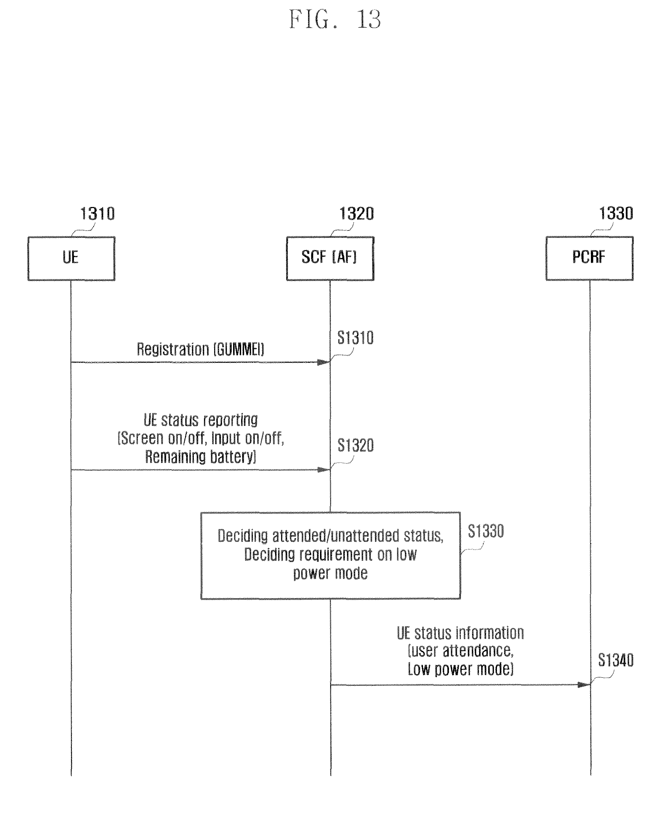

When the information collected by the SCF 1220 is needed to be directly transmitted to the MME without passing through the PCRF 1230 (that is, when the SCF and the MME can be directly connected to each other), the SCF 1220 is needed to discover the MME for the UE 1210. FIG. 13 illustrates a method in which the SCF discovers the MME connected to the UE.

FIG. 13 is a flowchart illustrating a method in which an SCF discovers an MME connected to a UE according to an embodiment of the present disclosure.

Referring to FIG. 13. in order to allow an SCF 1320 to discover a PCRF 1330 connected to a UE 1310, the UE 1310 may transmit information (an MME name and a GUTI or CUMMEI) for discovering the PCRF 1330 to the SCF 1320 in an operation of establishing an initial connection with the SCF 1320 in operation S 1310.

The transmission includes transmission of information for discovering, when the PCRF 1330 of the UE 1310 is changed, the changed MME to the SCF 1320.

Meanwhile, when the SCF is directly connected to the MME, information for changing the operation of the UE may be transmitted in addition to the information described in the above various embodiments.

For example, when the UE 1310 transmits a battery residual quantity to the SCF 1320 in operation S1320, the SCF 1320 directly transmits the battery residual quantity to the PCRF 1330 in operation S1340 or transmits a result of a determination in operation S 1330 that a low power mode is needed based on the battery residual quantity to the PCRF 1330 through a UE status information message in operation S1340.

Accordingly, the PCRF 1330 may switch the UE to a dormant mode or perform an operation of changing a Discontinuous Reception (DRX) cycle.

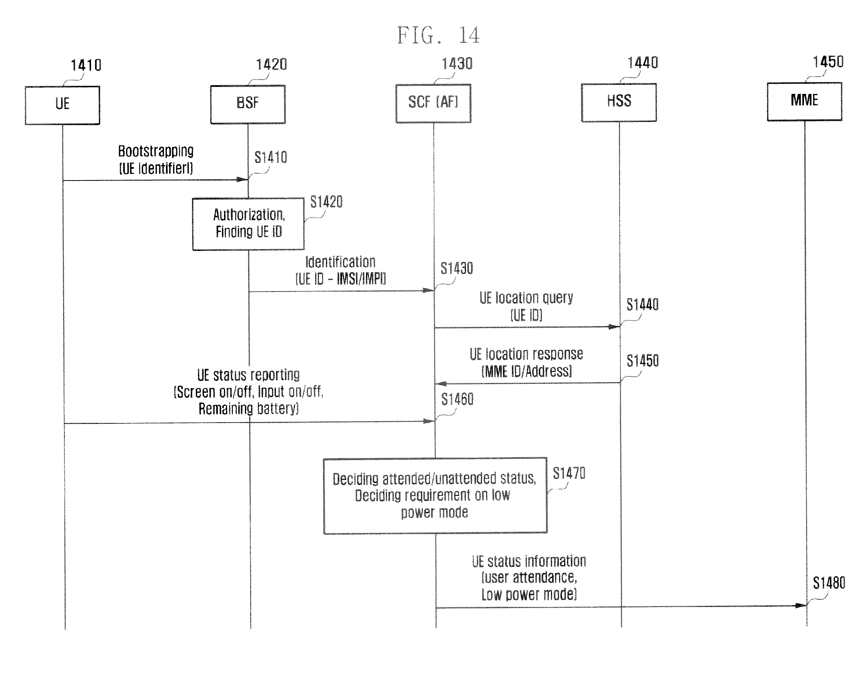

FIG. 14 is a flowchart illustrating a process of discovering an MME for a UE according to an embodiment of the present disclosure.

Referring to FIG. 14, another embodiment of discovering the MME for the UE describes a method for using an HSS 1440.

When a UE 1410 initially accesses an SCF 1430, the UE 1410 performs a security process (authentication and security setup process) and performs a bootstrapping process with a Bootstrapping Server Function (BSF) 1420 in operation S1410.

Thereafter, after the authentication process in operation 1420, the BSF 1420 may transmit an ID (IMSI or IMPI) of the UE 1410 to the SCF 1430 in operation S 1430.

The SCF 1430 inquiries about an address of an MME 1450 controlling the UE 1410 by transmitting a UE location query message to an HSS 1440 by using the ID of the UE 1410 in operation S1440.

The HSS 1440 may inform the SCF 1450 of the address or the ID of the MME 1450 for the UE 1410 through a UE location response message in operation S1450.

Since next operations are the same as the process of FIG. 13, a description will be omitted.

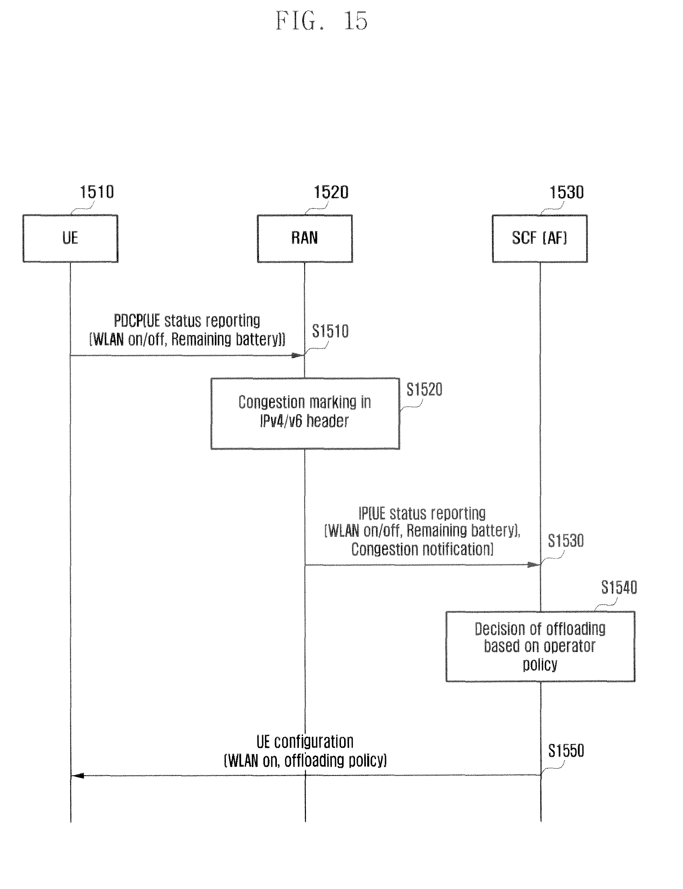

FIG. 15 is a flowchart illustrating a process of marking congestion information on a user plane and transmitting the user plane and a method for simultaneously using information of a UE status analyzer according to an embodiment of the present disclosure.

Referring to FIG. 15, a UE 1510 may figure out an address of an SCF 1530 and access the SCF 1530 according to the above various embodiments during the PDN connection and EPS bearer setup process and the network may include information indicating that the congestion control information marking on a packet filter for an IP flow heading for the SCF 1530 is needed.

Accordingly, the UE 1510 may inform the SCF 1530 of status information of the UE, for example, information on whether a WLAN is turned on or off or a battery residual amount in operation S1510. At this time, a PDCP header of the packet transmitted to the SCF 1530 may include information indicating that the congestion information marking is needed according to the setup of the packet filter.

A RAN node 1520 having received the information may insert the congestion information into a GTP-U header or an IP header for the packet transmitted to the SCF 1530 when the congestion is generated in operation S1520. When the congestion information is included in the GTP-U header, the PGW may transmit the congestion information to the PCRF and the PCRF may transmit the congestion information to the AP.

The SCF 1530 having received the congestion information and status information of the UE in operation S1530 may determine whether it is needed to change an operation parameter of the UE 1510 in operation S 1540 and the SCF 1530 may transmit a command message for changing the operation parameter of the UE 1510 to the UE in operation S1550 when needed. For example, the command message may include a command for turning on the WLAN and a policy for moving to the WLAN.

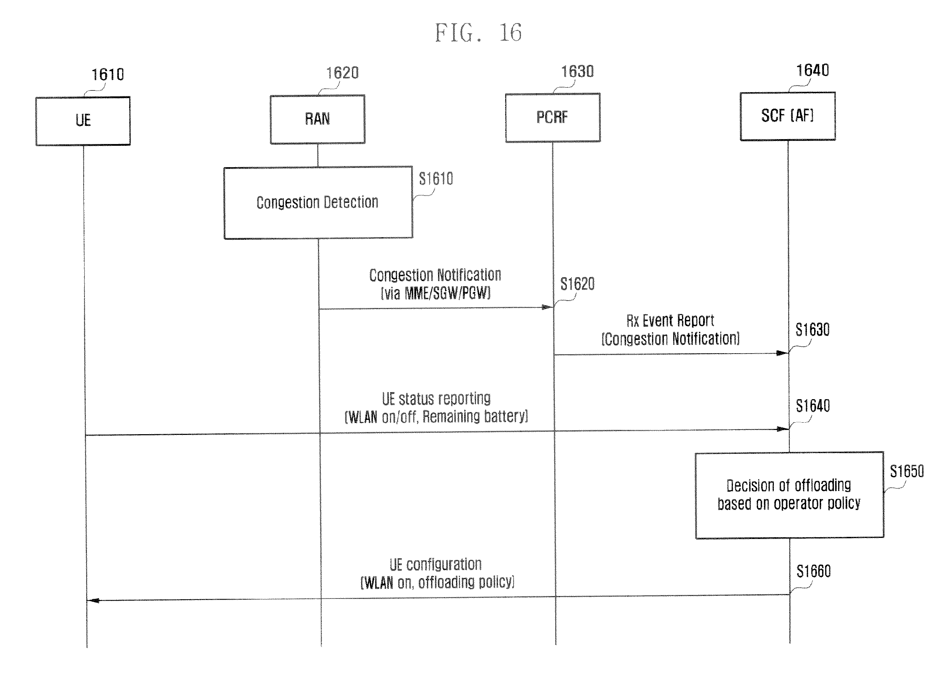

A similar operation may be used when a UE status is transmitted to the SCF and a RAN congestion status is transmitted through a control plane instead of a user plane, and an embodiment thereof will be illustrated in FIG. 16.

FIG. 16 illustrates an embodiment in which a congestion status of a RAN is transmitted through a control plane according to an embodiment of the present disclosure.

Referring to FIG. 16, when a RAN node 1620 detects generation of the congestion status in operation S1610, the RAN node 1620 transmits a congestion notification message to a PCRF 1630 through the MME, the SGW, and the PGW in operation S1620. Thereafter, the PCRF 1630 transmits an Rx event report message including information on the congestion notification to an SCF 1640 in operation S1630.

Thereafter, a UE 1610 transmits a UE status report to the SCF 1640. Since descriptions of operations S1640 to S1660 in which the SCF 1640 controls the UE 1610 based on the UE status report have been made through the previous drawing, descriptions thereof will be omitted.

Meanwhile, the SCF can reset the operation parameter of the service application being executed by the UE based on the status information of the UE and the congestion information of the network.

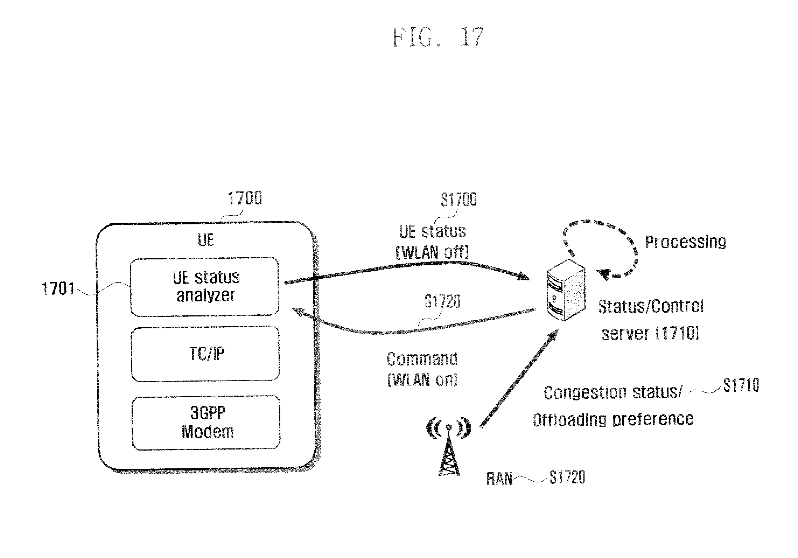

FIG. 17 illustrates an embodiment in which a RAN node controls a UE based on status information of the UE and the congestion information of a network according to an embodiment of the present disclosure.

Referring to FIG. 17, a UE 1700 transmits information of the service application being currently executed to an SCF 1710 in operation S1700. Further, a RAN node 1720 may inform the SCF 1710 of the congestion information through a user plane or a control plane in operation S 1710.

Based on the congestion information, the SCF 1710 may instruct the UE 1700 to change the operation parameter of the service application being executed in operation S1720 and a UE status analyzer 1701 communicating with the SCF 1710 transmits a new operation parameter to the corresponding service application to use the new operation parameter. An example of the new operation parameter may correspond to a WLAN and the SCF 1710 transmits an operation parameter for turning on the WLAN to the UE 1700 in FIG. 17.

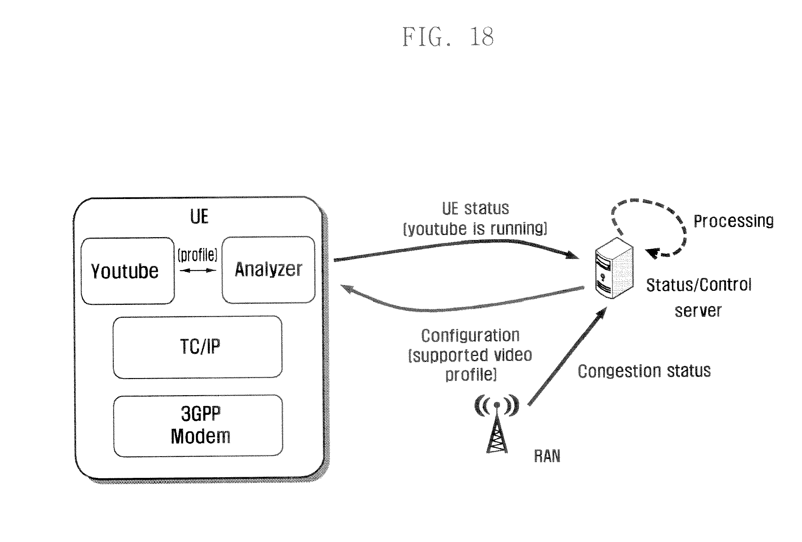

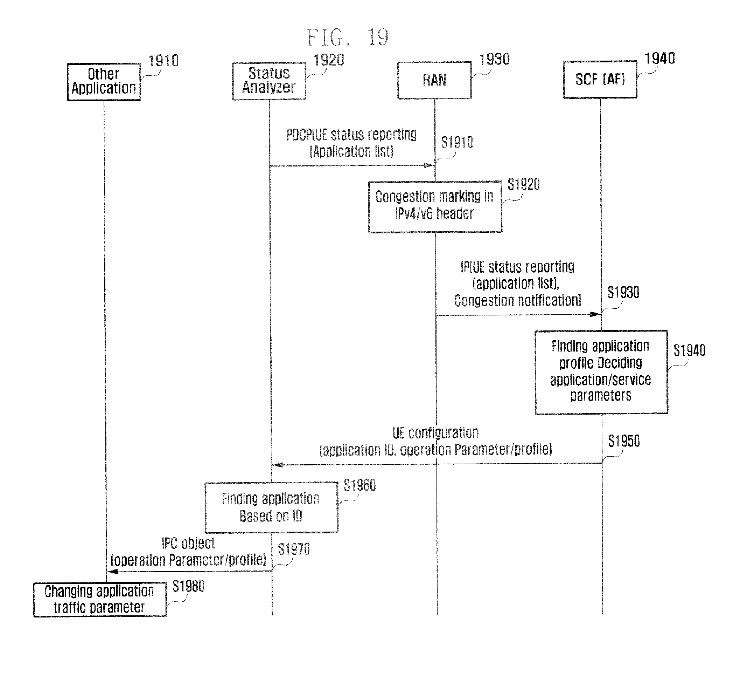

FIGS. 18 and 19 illustrate an operation in which a RAN node controls a UE based on status information of the UE and congestion information of a network according to an embodiment of the present disclosure.

Referring to FIG. 18, it is assumed that the user uses a YouTube application.

Referring to FIG. 19, a UE transmits information of service applications being currently executed to an SCF 1940 according to a setup.

Similar to FIG. 16, the congestion information may be transmitted through the user plane or separately transmitted through the control plane together with the message including the status information. The processes are illustrated in operation S1910 to S1930. Since the operations have been described above, descriptions thereof will be omitted.

The SCF 1940 having received the message from a RAN 1930 may determine to change the operation parameter of the service application being executed according to the congestion information in operation S1940. For example, when a video streaming service needing 100 kbps is currently executed and the SCF 1940 is formed such that the congestion information can be transmitted at a maximum of 50 kbps to the UE, the SCF 1940 may instruct the UE to reduce the transmission parameter of the corresponding service application to 50 kbps.

Alternatively, when the SCF 1940 desires to currently reproduce a video of High Definition (HD) of a video service application of the UE but provision of the service is difficult due to a network status, the SCF 1940 may instruct to reproduce a video of Standard Definition (SD).

As illustrated in operation S1950, such an operation parameter may be transmitted together with information which can refer to a target service application through a UE configuration message, for example, a service application ID.

A UE status analyzer 1920 having received the information may discover the target service application in operation S1960 and transmit a new operation parameter received from the SCF 1940 to a corresponding service application 1910 in operation S1970. Thereafter, the service application 1910 operates the UE by applying the received new operation parameter.

Meanwhile, information of the UE using the UE status analyzer may be used for generating a policy for traffic offloading by an Access Network Discovery Service Function (ANDSF) and the application traffic parameter is changed in operations S1980.

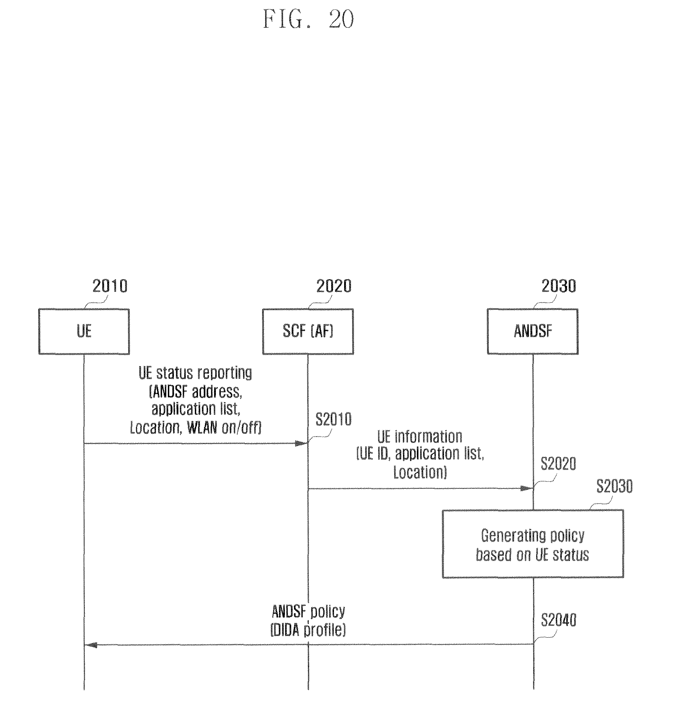

FIG. 20 illustrates a method for using an SCF and an ANDSF according to an embodiment of the present disclosure.

Referring to FIG. 20, a UE 2010 transmits status information (information on an executed service application, a location of the service application. and a status of a WLAN) to an SCF 2020 together with information (address or ID) by which an ANDSF can be discovered in operation S2010.

Thereafter, the SCF 2020 discovers an ANDSF 2030 based on the information and transmits the status information of the UE received from the UE 2010 to the ANDSF 2030 in operation S2020.

The ANDSF 2030 having received the status information may generate a traffic offloading policy for the service application actually used by the UE among thousands of service applications or tens of thousands of service applications which can be used by the UE 2010 in operation S2030 and transmit the generated traffic offloading policy to the UE 2010 in operation S2040.

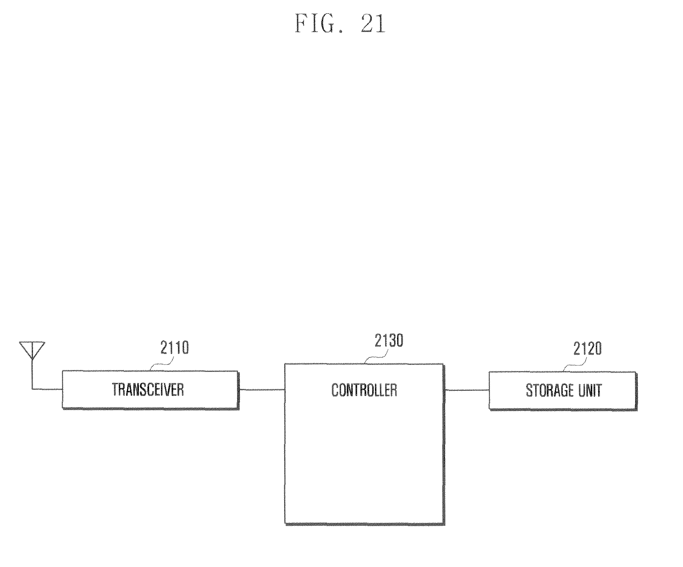

FIG. 21 is a block diagram illustrating an internal structure of a UE according to an embodiment of the present disclosure.

Referring to FIG. 21, the UE may include a transceiver 2110, a storage unit 2120 and a controller 2130. The transceiver 2110 may transmit/receive a signal to/from a RAN (ENB). The signal may include a control signal, data. and the like.

The storage unit 2120 may store various types of programs needed for the operations of the UE. More particularly, the storage unit 2120 may store a packet filter received from a core network node and information on whether to perform congestion information marking for each packet included in the packet filter.

The controller 2130 controls a signal flow between blocks for the operations of the UE. More specifically, the controller 2130 may detect reception of packet filter information transmitted from a PDN gateway from the ENB. Further, when a packet to be transmitted is generated, the controller 2130 may determine whether the congestion information marking is needed based on the packet filter. As a result of the determination, when the congestion information marking is needed, the controller 2130 controls to insert congestion notification required indication into the packet to be transmitted and transmit the packet. In this event, the controller 2130 may control to insert the congestion notification required indication into a header or a control field of the packet.

The packet filter includes information on whether to apply the congestion information marking to matching IP flows.

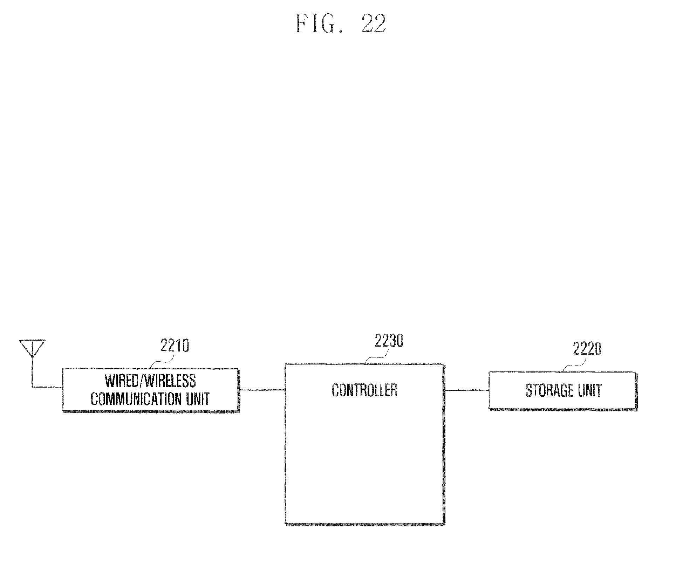

FIG. 22 is a block diagram illustrating an internal structure of a RAN node, that is, an ENB according to an embodiment of the present disclosure.

Referring to FIG. 22, the ENB may include a wired/wireless communication unit 2210, a storage unit 2220 and a controller 2230. The wired/wireless communication unit 2210 may include a wireless communication unit for communicating with the UE and a wired communication unit for communicating with nodes of a core network.

The storage unit 2220 may store various types of programs needed for the operations of the ENB. The storage unit 2220 may store information on whether to apply the congestion information marking received from the core network node or the UE.

The controller 2230 may control a signal flow between blocks to allow the ENB to operate.

The controller 2230 may receive a message including congestion notification required indication from the core network node of the wireless communication system. Further, when a packet is received from the UE, the controller 2230 may determine whether the congestion status information marking on the packet is needed based on the congestion notification required indication. In addition, the controller 2230 may control to transmit a data packet on which the congestion status information marking is performed according to the determination.

In this event, the core network node may be an MME or a PCRF.

Meanwhile, according to an embodiment of the present disclosure, a unit of controlling the congestion information marking may be a PDN connection or an EPS bearer. When the unit of controlling the congestion information marking is the PDN connection, the congestion notification required indication may be received during a default bearer setup process. In contrast, when the unit of controlling the congestion information marking is the EPS bearer, the congestion notification required indication may be received during an EPS bearer setup or EPS bearer modification process.

Meanwhile, the controller 2230 may receive a packet including the congestion notification required indication from the UE and extract a header from the packet, so as to determine whether the congestion information marking is needed. Further, when the congestion information marking is needed and the ENB is in the congestion status, the controller 2230 may control to transmit the packet on which the congestion status information marking is performed. In this event, the controller 2230 may perform the congestion status information marking on an IP header or GTP-U header.

According to the above described embodiment of the present disclosure, the congestion status can be effectively controlled.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method for controlling congestion by an Evolved Node B (ENB) in a wireless communication system, the method comprising:
receiving a message comprising congestion notification required indication from a core network node of the wireless communication system;
determining whether a congestion notification on the packet is required based on the congestion notification required indication; and
transmitting a data packet with the congestion notification according to a result of the determination.

2. The method of claim 1, wherein the congestion notification is comprised in an Internet Protocol (IP) header for an IP packet of the packet received from the UE,
wherein the congestion notification is comprised in a General Packet Radio Service (GPRS) Tunneling Protocol User Plane (GTP-U) header added to a packet received from the UE.

3. The method of claim 1, further comprising, when the UE is switched to a connected state from an idle state, receiving the congestion notification required indication from the core network node.

4. The method of claim 1, wherein a unit of a control of the congestion notification comprises at least one of a Packet Data Network (PDN) connection and an Evolved Packet System (EPS) bearer,
wherein, when the unit of the control of the congestion notification comprises the PDN connection, the congestion information marking application information is received in a default bearer setup operation,
wherein, when the unit of the control of the congestion information marking comprises the EPS bearer, the congestion notification required indication is received in at least one of an EPS bearer setup operation and an EPS bearer modification operation.

5. The method of claim 1, wherein the core network node comprises at least one of a Mobility Management Entity (MME) and a Policy Charging and Rules Function (PCRF).

6. A method for controlling congestion by a core network node in a wireless communication system, the method comprising:
determining whether a congestion notification by an Evolved Node B (ENB) is required;
generating a message comprising congestion notification required indication based on a result of the determination; and
transmitting the message to the ENB.

7. The method of claim 6, wherein the congestion notification is comprised in an Internet Protocol (IP) header for an IP packet of a packet received from a User Equipment (UE) or in a General Packet Radio Service (GPRS) Tunneling Protocol User Plane (GTP-U) header added to a packet received from a UE.

8. The method of claim 6, further comprising, when a UE is switched to a connected state from an idle state, transmitting the congestion notification required indication to the ENB.

9. The method of claim 6, wherein the core network node comprises at least one of a Mobility Management Entity (MME) and a Policy Charging and Rules Function (PCRF).

10. An Evolved Node B (ENB) controlling congestion in a wireless communication system, the ENB comprising:
a transceiver configured to transmit/receive a signal to/from a User Equipment (UE) or a core network node of the wireless communication system; and
a controller configured to receive a message comprising congestion notification required indication from the core network node, to determine whether a congestion notification on the packet is required based on the congestion notification required indication, and to transmit a data packet with the the congestion notification according to a result of the determination.

11. The ENB of claim 10, wherein the congestion notification is comprised in an Internet Protocol (IP) header for an IP packet of the packet received from the UE or a GPRS Tunneling Protocol User Plane (GTP-U) header added to a packet received from the UE.

12. The ENB of claim 10, wherein, when the UE is switched to a connected state from an idle state, the congestion notification required indication is received from the core network node.

13. The ENB of claim 10, wherein a unit of a control of the congestion notification comprises at least one of a Packet Data Network (PDN) connection and an Evolved Packet System (EPS) bearer, and the congestion notification required indication is received in a default bearer setup operation when the unit of the control of the congestion notification comprises the PDN connection and received in at least one of an EPS bearer setup operation and an EPS bearer modification operation when the unit of the control of the congestion notification comprises the EPS bearer.

14. A core network node controlling congestion in a wireless communication system, the core network node comprising:
a transceiver configured to transmit/receive a signal to/from an Evolved Node B (ENB); and
a controller configured to determine whether a congestion notification by an ENB is required, to generate a message comprising congestion notification required indication based on a result of the determination, and to transmit the message to the ENB.

15. The core network node of claim 14, wherein the congestion notification is comprised in an Internet Protocol (IP) header for an IP packet of a packet received from a User Equipment (UE) or a General Packet Radio Service (GPRS) Tunneling Protocol User Plane (GTP-U) header added to the packet received from the UE,
wherein, when a UE is switched to a connected state from an idle state, the congestion notification required indication is transmitted to the ENB.
